(19) Europäisches Patentamt

European Patent Office

Office européen des brevets

(11) **EP 0 879 527 B1**

(12) **EUROPEAN PATENT SPECIFICATION**

(45) Date of publication and mention
of the grant of the patent:
**15.09.2004 Bulletin 2004/38**

(51) Int Cl.[7]: **H04M 3/22**, H04B 3/46

(21) Application number: **97901723.3**

(86) International application number:
**PCT/GB1997/000265**

(22) Date of filing: **30.01.1997**

(87) International publication number:
**WO 1997/032428 (04.09.1997 Gazette 1997/38)**

(54) **TRAINING PROCESS FOR SIGNAL CLASSIFICATION APPARATUS**

TRAININGSVERFAHREN FÜR EIN SIGNALKLASSIFIKATIONSGERÄT

PROCESSUS D'APPRENTISSAGE POUR APPAREIL DE CLASSIFICATION DE SIGNAUX

(84) Designated Contracting States:
**BE DE DK FI FR GB IT NL SE**

(30) Priority: **29.02.1996 EP 96301393**
**29.02.1996 GB 9604315**

(43) Date of publication of application:
**25.11.1998 Bulletin 1998/48**

(73) Proprietor: **BRITISH TELECOMMUNICATIONS**
**public limited company**
**London EC1A 7AJ (GB)**

(72) Inventors:
• **HOLLIER, Michael Peter**
**Ipswich IP5 7XX (GB)**
• **GRAY, Philip**
**Ipswich, Suffolk IP4 5HP (GB)**

(74) Representative:
**Lidbetter, Timothy Guy Edwin et al**
**BT Group Legal**
**Intellectual Property Department,**
**PP C5A**
**BT Centre**
**81 Newgate Street**
**London EC1A 7AJ (GB)**

(56) References cited:
• **IEEE INT CONF ON COMMUNICATIONS-SESSION 33.3, vol. 2, 7 - 10 June 1987, SEATTLE(US), pages 1164-1171, XP000573376 EDMUND A. QUINCY: "PROLOG-BASED EXPERT PATTERN RECOGNITION SYSTEM SHELL FOR TECHNOLOGY INDEPENDENT, USER-ORIENTED CLASSIFICATION OF VOICE TRANSMISSION QUALITY"**
• **IEEE PACIFIC RIM CONFERENCE ON COMMUNICATIONS, COMPUTERS AND SIGNAL PROCESSING, 1 - 2 June 1989, VICTORIA(CA), pages 208-211, XP000077468 R.F.KUBICHEK ET AL: "SPEECH QUALITY ASSESSMRNT USING EXPERT PATTERN RECOGNITION TECNIQUES"**
• **PATENT ABSTRACTS OF JAPAN vol. 17, no. 202 (E-1353), 20 April 1993 & JP 04 345327 A (NIPPON TELEGR&TELEPH CORP), 1 December 1992,**

**Description**

This invention relates to the classification of data which can be used to train a trainable process. It is of application to the assessment of signals carried by a telecommunications system, for example to assess the condition of telecommunications systems whilst in use. Embodiments will be described of application to audio signals carrying speech, and to video signals.

Signals carried over telecommunications links can undergo considerable transformations, such as digitisation, data compression, data reduction, amplification, and so on. All of these processes can distort the signals. For example, in digitising a waveform whose amplitude is greater than the maximum digitisation value, the peaks of the waveform will be converted to a flat-topped form (a process known as peak clipping). This adds unwanted harmonics to the signal. Distortions can also be caused by electromagnetic interference from external sources.

Many of the distortions introduced by the processes described above are non-linear, so that a simple test signal may not be distorted in the same way as a complex waveform such as speech, or at all. For a telecommunications link carrying data it is possible to test the link using all possible data characters; e.g. the two characters 1 and 0 for a binary link, the twelve tone-pairs used in DTMF (dual tone multi-frequency) systems, or the range of "constellation points" used in a QAM (Quadrature Amplitude Modulation) system. However an analogue signal does not consist of a limited number of well-defined signal elements, but is a continuously varying signal. For example, a speech signal's elements vary according not only to the content of the speech (and the language used) but also the physiological and psychological characteristics of the individual talker, which affect characteristics such as pitch, volume, characteristic vowel sounds etc.

It is known to test telecommunications equipment by running test sequences using samples of the type of signal to be carried. Comparison between the test sequence as modified by the equipment under test and the original test sequence can be used to identify distortion introduced by the equipment under test. However, these arrangements require the use of a pre-arranged test sequence, which means they cannot be used on live telecommunications links - that is, links currently in use - because the test sequence would interfere with the traffic being carried and be perceptible to the users, and also because the live traffic itself (whose content cannot be predetermined) would be detected by the test equipment as distortion of the test signal.

In order to carry out tests on equipment in use, without interfering with the signals being carried by the equipment (so-called non-intrusive testing), it is desirable to carry out the tests using the live signals themselves as the test signals. However, a problem with using a live signal as the test signal is that there is no instantaneous way of obtaining, at the point of measurement, a sample of the original signal. Any means by which the original signal might be transmitted to the measurement location would be as subject to similar distortions as the link under test.

The present Applicant's co-pending International Patent applications WO96/06495 and WO96/06496 (both published on 29th February 1996) propose two possible solutions to this problem. WO96/06495 describes the analysis of certain characteristics of speech which are talker-independent in order to determine how the signal has been modified by the telecommunications link. It also describes the analysis of certain characteristics of speech which vary in relation to other characteristics, not themselves directly measurable, in a way which is consistent between individual talkers, and which may therefore be used to derive information about these other characteristics. For example, the spectral content of an unvoiced fricative varies with volume (amplitude), but in a manner independent of the individual talker. The spectral content can thus be used to estimate the original signal amplitude, which can be compared with the received signal amplitude to estimate the attenuation between the talker and the measurement point.

In WO96/06496, the content of a received signal is analysed by a speech recogniser and the results of this analysis are processed by a speech synthesiser to regenerate a speech signal having no distortions. The signal is normalised in pitch and duration to generate an estimate of the original speech signal which can be compared with the received speech signal to identify any distortions or interference, e.g. using perceptual analysis techniques as described in International Patent Applications WO94/00922 and WO95/15035.

Typically speech transmission over a limited bandwidth employs data reduction e.g. linear predictive codecs (LPCs)). Such codecs are based on an approximation to the human vocal tract and represent segments of speech waveform as the parameters required to excite equivalent behaviour in a vocal tract model.

In the Applicant's International Patent Specification WO97/05730, there is disclosed a method and apparatus for assessing the quality of a signal carrying speech, in which the signal is analysed according to a spectral representation model (preferably an imperfect vocal tract model, although auditory models may be used instead) to generate output parameters, the output parameters are classified according to a predetermined network definition function, and an output classification is generated. The classifications can be generated according to a network definition function which is derived in a preliminary step from data for which the output value is known. Alternatively, it could be derived according to predetermined rules derived from known characteristics known to occur under certain conditions in the system to be tested.

The term "auditory model" in this context means a model whose response to a stimulus is approximately the same as the response of the human auditory system (i.e. the ear-brain combination). It is a particular category of the more general term "perceptual" model; that is, a model whose response to a stimulus is approximately the same as the response of the human sensory system (i.e. eye-brain, ear-brain, etc.).

The term 'imperfect vocal tract model' in this context means a vocal tract model which is not 'ideal' but is also capable of generating coefficients relating to auditory spectral elements that the human vocal tract is incapable of producing. In particular it means a model that can parametrically represent both the speech and the distortion signal elements, which is not the normal goal for vocal tract model design. Speech samples known to be ill-conditioned or well-conditioned, (i.e. respectively including or not including such distortion elements) are analysed by the vocal tract model, and the coefficients generated can then be identified as relating to well or ill-conditioned signals, for example by a trainable process such as a neural network. In this way classification data can be generated for vocal tract parameters associated with each type of signal, (any parameters which are associated with both, and are therefore unreliable indicators, can be disregarded in generating the classification data), so that when an unknown signal is subsequently processed, an output can be generated using the previously generated classification data associated with those parameters which relate to the unknown signal.

Sequences of parameters, as well as individual parameters, may also be used to characterise a signal. Data compression techniques may be used to store the parameters recorded.

The apparatus of the aforementioned WO97/05730 comprises training means for generating the stored set of classification data, the training means comprising first input means for supplying a sample of speech to the modelling means; second input means for supplying to the training means known output information (referred to hereinafter as "labels") relating to the speech sample; means for generating classification data from the modelling means based on the labels, and storage means for storing classification data generated by the modelling means.

The speech segments used in the training sample must therefore each be labelled as well or ill-conditioned. An "Expert System" approach, such as described by Quincy in a paper presented to the Institute of Electrical and Electronic Engineers (Seattle, 9th June 1987) would be a major undertaking for a typical sample, as it comprises several hours of speech, and many such samples are required in order to train the system to respond correctly to a range of talkers, conditions, and other variables. The duration of an individual segment is typically 20 milliseconds, so in all several million segments must be labelled. Moreover it would be necessary to use a number of human analysts to classify each sample to obtain a statistically valid result because of individual variations in perception, concentration, and other factors. Moreover, it is not possible for a human observer to accurately identify whether individual segments of such short duration are well- or ill-conditioned.

The invention provides a training apparatus according to claim 1 a training method according to claim 28 and a signal classification apparatus according to claim 49.

According to a first aspect of the present invention, there is provided a training apparatus for training a signal analysis apparatus of the type arranged to detect predetermined components of a signal, characteristic of distortion being present in the signal, and for generating a classification indicative of the severity and/or types of distortion present, characterised in that the training apparatus comprises means for providing a training sequence comprising a first signal and a distorted version of the first signal, analysis means for receiving the training sequence and generating a distortion perception measure for indicating the extent to which the distortion would be perceptible to a human observer, and means for applying the distortion perception measure and the distorted signal to the signal classification apparatus to determine the classifications to be applied to subsequently input signals.

In a further aspect the invention comprises a method for training a trainable signal analysis process of the type in which predetermined components of a signal characteristic of distortion being present in the signal are detected, and a classification indicative of the severity and/or types of distortion present is generated, the training method being characterised by the steps of providing a training sequence comprising a first signal and a distorted version of the first signal, measuring the extent to which the distortion of the signal will be perceptible to a human observer, and defining a classification operation in accordance with the result of said measurement, the classification operation being arranged to classify subsequently input signals in accordance with the presence or absence of perceptually significant distortion.

The invention also extends to a classification means for signal classification apparatus arranged to detect and classify distortions occurring in signals input to the apparatus in accordance with classification data stored in the classification means, characyterised in that the data stored in the classification means has been generated according to the method of the invention.

In a preferred arrangement the measurement process estimates the effect which would be produced on the human sensory system by distorted and undistorted versions of the same signal, and determines the differences between the said effects, and generates said distortion perception measure in dependence upon said difference. Preferably, the measurement process generates said distortion perception measure to depend upon the significance of said distortion to a human observer, and to depend non-linearly upon the amplitude of said distortion. The measurement process preferably generates a plurality of spectral component signals of said test signal and/or said distorted signal, and estimates, for each spectral component signal, the masking effect which that spectral component signal would produce on the human sensory system.

In a speech application, the training sequences will typically be large corpora of natural speech, in order to account for the variations in individual talkers' characteristics. In the preferred embodiment the measurement process comprises the steps of decomposing the distorted speech signal into a plurality of spectral component bands, the spectral component bands being shaped to provide spectral masking; calculating the temporal masking of the signal due to preceding and/or succeeding temporal portions thereof; forming, for each of the spectral component signals, a representation of the difference between the component signal of the distorted signal and a correspondingly calculated component of the test signal; and generating said distortion perception measure from said difference measure.

Suitable speech analysis processes are described in International Patent Specifications WO94/00922, WO95/01011 and WO95/15035. By labelling the segments automatically, using a distortion perception measure, the classification operation can be derived objectively, but nevertheless according to factors perceptible to a human observer.

The invention is not limited to speech signals, or even to audio signals. The same principles can be applied for example to video signals. In such a case individual frames of the video signal can form the individual elements of the training sequence.

Video signals are subject to a number of distortions which can cause effects perceptible to the viewer. Distortions which affect the boundaries between different image elements are generally perceptually more significant than changes which take place within a body perceived by an observer as part of one image element. Such boundary distortions include blurring, displacement (thereby changing the shape of an object), the complete disappearance of a boundary, or indeed the appearance of a boundary where there should be no boundary. Therefore in a preferred arrangement the system identifies distortions which affect the characteristics of boundaries as being of greater perceptual significance than other types of distortion.

A boundary is perceived by a viewer where there is an abrupt change in some property of the image; usually brightness and/or colour. Two such changes spatially close together may be perceived as a single boundary, e.g. a line separating two areas of otherwise similar brightness and colour. Boundaries may therefore be identified by spectral decomposition of the image derived from the signal. An abrupt change produces a high-frequency 'spike' in the spectral decomposition. In a colour system, a change in colour is identifiable as a change in the relative brightness of the different colours making up the image.

Distortion effects may be introduced deliberately by the producer of the video signal, so it may be preferable to monitor a video signal for sufficiently long to identify whether the effect which has been identified persists, (suggesting a fault in transmission), or was transient, (suggesting that it was introduced deliberately). Such effects are less likely on speech systems.

Trainable processes such as neural nets function most effectively with simple binary tests (good/bad; yes/no). It is therefore advantageous to arrange the monitoring system to have a number of such processes operating independently, each testing a different property or combination of properties, and each relating to one or more different parameters.

The invention may be used to train or retrain a trainable system *in situ*. This allows the trainable system to be trained on a real system, allowing it to recognise a new characteristic as the system to be monitored develops. This *in situ* training can be done by transmitting a training sequence over the system to be monitored, (temporarily occupying one channel of the system), and comparing the sequence received with an identical sample of the same sequence generated at the monitoring location.

Exemplary embodiments of the invention will now be described, with reference to the accompanying drawings which show the functional relationship of the various elements of the embodiment. It will be appreciated that the invention can be embodied advantageously in software to run on a general purpose computer.

Figure 1 shows the functional elements of a trainable system for analysing a speech signal, configured for a training process.

Figure 2 shows the training apparatus of Figure 1 in greater detail.

Figure 3 shows the analysis apparatus forming part of Figure 2 in greater detail.

Figure 4 shows an apparatus by which initial speech samples supplied by the data source of Figure 2 may be generated.

Figure 5 shows the functional elements of the same system configured for a run with unknown data.

Figure 6 shows an analysis apparatus, analogous to that of Figure 3, for training an apparatus for analysing a video signal.

Figure 7 shows, in block diagram form, an apparatus for analysing a video signal, analogous to that shown in Figure 5, having been trained using the apparatus of Figure 6.

Figure 8 shows, in block diagram form, a variant of Figure 7 having a plurality of classifiers, and also illustrating an *in situ* retraining process.

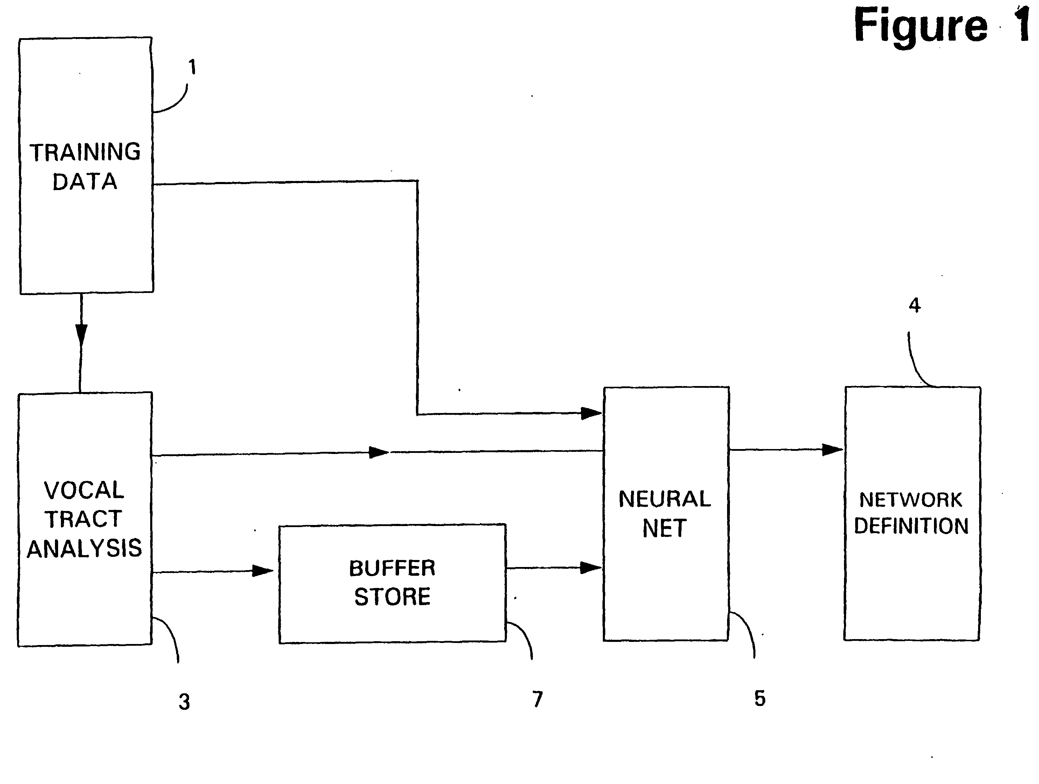

The three embodiments will now be described in detail. Firstly, the embodiment of Figures 1 to 5, configured for a speech-carrying signal, will be described.

To aid understanding of this embodiment it is appropriate here to briefly discuss the characteristics of vocal tract analysis systems and trainable processes. The vocal tract is a non-uniform acoustic tube which extends from the glottis to the lips and varies in shape as a function of time [Fant G C M, "Acoustic Theory of Speech Production", Mouton and Co., 's-gravehage, the Netherlands, 19601. The major anatomical components causing the time varying change are the lips, jaws, tongue and velum. For ease of computation it is desirable that models for this system are both linear and time-invariant. Unfortunately, the human speech mechanism does not precisely satisfy either of these properties. Speech is a continually time varying-process. In addition, the glottis is not uncoupled from the vocal tract, which results in non-linear characteristics [Flanagan J L "Source-System Interactions in the Vocal Tract", Ann. New York Acad. Sci 155, 9-15, 1968]. However, by making reasonable assumptions, it is possible to develop linear time invariant models over short intervals of time for describing speech events [Markel J D, Gray A H, "Linear Prediction of Speech", Springer-Verlag Berlin Heidelberg New York, 1976]. Linear predictive codecs divide speech events into short time periods, or frames, and use past speech frames to generate a unique set of predictor parameters to represent the speech in a current frame [Atal B S, Hanauer S L "Speech Analysis and Synthesis by Linear Prediction of the Speech Wave" J. Acoust. Soc. Amer., vol. 50, pp. 637-655,1971]. Linear predictive analysis has become a widely used method for estimating such speech parameters as pitch, formants and spectra. Auditory models (time/frequency/amplitude spectrograms) rely on audible features of the sound being monitored, and take no account of how they are produced, whereas a vocal tract model is capable of identifying whether the signal is speech-like, i.e. whether a real vocal tract could have produced it. Thus inaudible differences, not recognised by auditory models, will nevertheless be recognised by a vocal tract model.

For the purpose of measuring signal quality, the output parameters generated must be sensitive to the property being measured, i.e. the perceived speech quality. The model must therefore be capable of modelling non-speech-like distortion, and therefore an ideal vocal tract model would not be suitable. An ideal model would convert all input signals into speech-like forms (not necessarily the original ones if the distortion is bad). This would make the classification process unreliable, as the distorted inputs and pure inputs would both be classified as speech like, rendering the training process impossible. It is therefore important that the vocal tract model is 'imperfect', in the sense previously defined, since the process relies on the output parameters from the vocal tract model being sensitive to the presence of non-human distortion elements in order to distinguish between ill-conditioned and well-conditioned signals. The Linear Predictive Coding model as described in "Digital Processing of Speech Signals": Rabiner L.R.; Schafer R.W; (Prentice-Hall 1978) page 396 is suitable for use as the analyser 3.

Spectral analysis may be used as an alternative to a vocal tract model, for example "one-third octave analysis" as discussed in Section 3.6 of "Frequency Analysis" by R.B. Randall, (published Bruel & Kjaer, 1987 (ISBN 87 87355 07 8).

The characteristics of trainable processes, and particularly neural nets, will now be discussed. In order to map a number of inputs onto a smaller number of predetermined results classes it is possible to use a series of rules, particularly if the mapping process represents a natural system. However, if the natural system is too complex, or the required mapping operates on abstract parameters, then a trainable process can be used to develop the required mapping in response to a series of known results, referred to as the training data. The known results are used to determine the relationship between the input parameters and the results classes such that subsequent unknown combinations of inputs can be classified. A neural network is designed to model the way in which the brain performs a particular task or function of interest. It is possible to train a neural network to perform useful computations through a process of learning [Haykin S, "Neural Networks, A Comprehensive Foundation", Macmillan IEEE Press, 1994]. To achieve good performance neural networks employ a massive interconnection of simple processing units. Interprocessing unit connection strengths, known as weights, are used to store the knowledge of the system. [Aleksander I, Morton H "An Introduction of Neural Computing" Chapman and Hall London, 1990]. The procedure used to perform the learning process is called the learning algorithm, the function of which is to modify the weights of the network in an orderly fashion so as to attain a desired design objective. The power of a neural network is derived from a massively parallel distributed structure and its ability to learn and therefore generalise; generalisation refers to the network producing reasonable outputs for inputs not encountered during training. Supervised learning is a form of training which involves presenting known examples of classes to the network and then modifying the interconnecting weights in order to minimise the difference between the desired and actual response of the system. The training is repeated for many examples from each of the classes of inputs until the network reaches a steady state. There is a close analogy between the input-output mapping performed by a neural network and the classification achieved by non-parametric statistical inference.

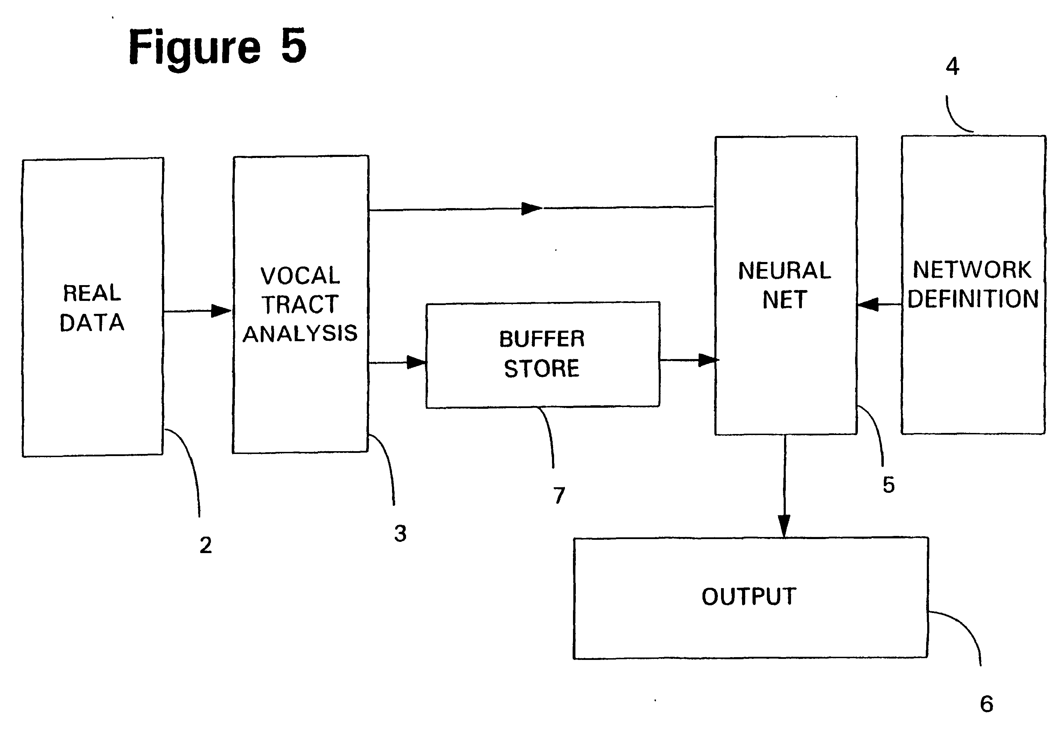

The operation of the system of the first (audio) embodiment will now be described. The system shown in Figures 1 and 5 comprises a source of training data 1 (Figure 1) and a source of live speech traffic (real data) 2 (Figure 5) both of which provide inputs to an analyser 3. Parameters associated with the training data are also supplied from the training data source 1 to a classification unit 5, which is shown as a trainable process, specifically in this embodiment a neural network 5. It will be recognised that other trainable processes, e.g. adaptive clustering may be used. Parameters output by the analyser 3 are fed to the neural network 5. During the training process the neural network 5 provides parameters to a store 4. These parameters define a network definition function. When real data are read, the parameters are retrieved from the store 4 and used by the neural network 5 to perform the network definition function on the values generated by the vocal tract analyser 3 to generate classification data which are supplied to an output 6. Typically the output data are in the form of a classification based on the values generated by the analyser 3, input to the neural network 5, which operates according to the network definition function to indicate the degree of distortion identified. Several quality levels may be defined, by setting a number of output classes. For practical purposes the signal is analysed as a sequence of time frames. Parameters derived from data relating to a first time frame may be used in analysis of subsequent time frames. For this purpose the output of the vocal tract analysis 3 is stored in a buffer store 7 for later use in subsequent operations of the neural network 5.

Before discussing the training process of the invention, the use of the system, once trained, to monitor live traffic will be described with reference to Figure 5. Real data can be supplied from the source 2 to the vocal tract analysis system 3. Distortion and interference may cause some individual time frames of the original signal to be distorted, or to be missing altogether. For example, if a given frame can only appear following one of a small subset of the possible frames, its appearance following a frame which is not a member of that subset indicates that either the subject frame or its predecessor (or both) has been distorted from some original frame which was appropriate to the context. The parameters of each individual frame may be 'permitted', (i.e. the parameters fall within the expected ranges), but a sequence of parameters, considered together, may be invalid, indicating that distortion is taking place. The parameters stored in the store 4 define a network definition function trained with such sequences. The parameters generated by the vocal tract analysis are fed as input to the neural network 5, defined by the network definition function, which classifies the data generated by the vocal tract analysis, to produce an output 6. The network definition function is defined by parameters stored in the store 4, to derive a classification of the quality of the signal supplied to the source 2.

In order to include parameters relating to time dependent properties, e.g. to identify not only whether the instantaneous characteristics of a sample are within the capabilities of the human vocal tract, but also whether the time variant properties are also within such capabilities, the output from the vocal tract analysis is stored in a buffer store 7. The stored parameters are fed as an input to the neural network 5 as "historical" data when a subsequent sample is supplied to the neural network 5, thereby measuring the characteristics of such time-dependent samples.

Many individual telecommunications links may be connected as the source 2 sequentially, in order to monitor the signal quality of a large number of links. Although particularly suited for non-intrusive measurement processes, the invention is also usable in so-called "intrusive" measurements, in which a test signal is used as the source rather than a live one.

The output 6 may be displayed in any suitable form to a user. For example a source for which a classification representing poor performance is generated may be indicated to a network manager so that the telecommunications link represented by the source 2 can be taken out of service and repaired if necessary, the link being re-established by another routing if possible. In one possible arrangement, such action may be controlled automatically, or it may be left to a human controller to act on the indications supplied by the output 6.

The parameters recorded for each time frame may be stored as a short code, representing the parameters. This takes up less memory, and can also shorten processing time considerably. The sequence of codes of successive time frames should, like the parameters they represent, follow one of a number of recognised sequences corresponding to real speech sounds. Should a set of parameters be identified for a time frame which have a code which should not follow the previous members of the sequence, or which is not coded for at all, this indicates that a distortion is present.

In order to generate the parameters stored in the store 4, the neural network 5 must first be trained to establish the network definition function, using training data. This process is illustrated in Figures 1 to 4. Test data is supplied from a training apparatus 1 to the vocal tract analyser 3. The training apparatus 1 also supplies classification parameters relating to the test data to the neural network 5 to allow the generation of the labels which define the network definition function.

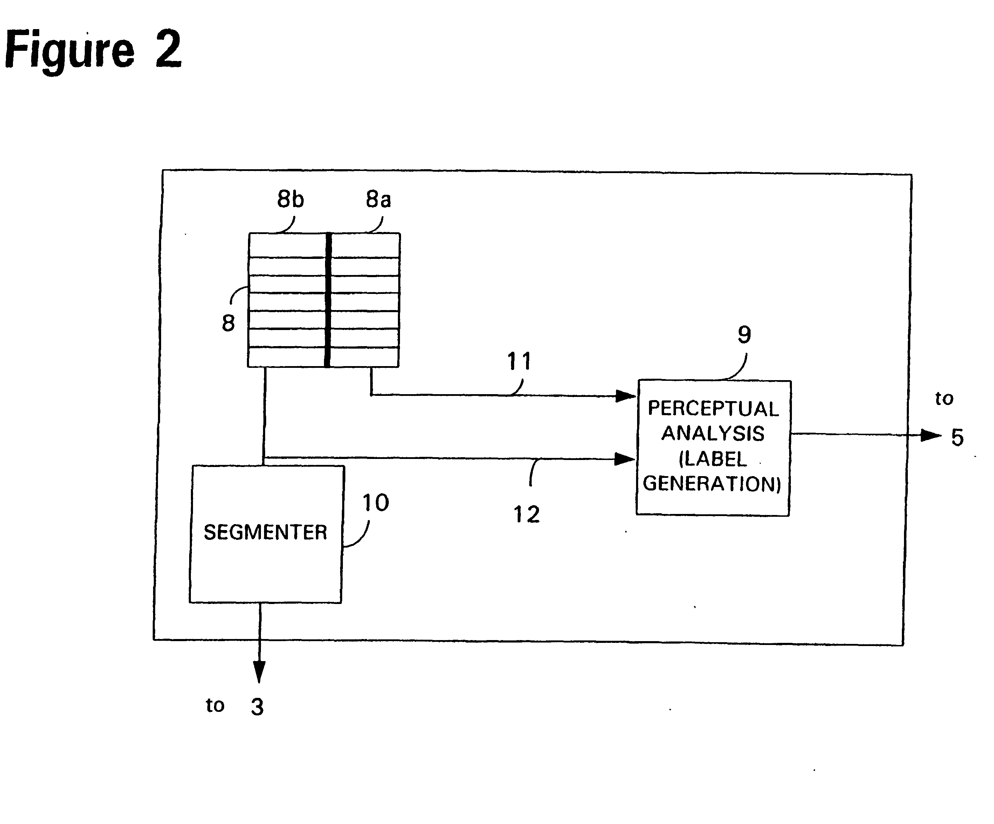

The generation of these labels will now be described, with reference to Figure 2 which shows the training apparatus 1 in greater detail. In order to generate the volume of data required in order to train a neural net, using speech segments which are too short to be individually assessed accurately by a human operator, an automatic method of generating such signals has been devised. This process relies on the use of a perceptual analysis model, that is a process which assesses whether a distortion of a signal is significant to a human observer. Initially a source of test signals 8 is provided which has two associated stores (8a,8b). The first store 8a has a "good" signal sample. The complete sample is typically of length of several hours. The second store 8b has a corresponding version of the same sample, which has been subjected to distortion, by means which will be described later. The sample stored in the second store 8b includes varying degrees and types of distortion. The distorted signal is divided into short segments. The good signal from the store 8a, and its corresponding distorted version from the store 8b, are fed through respective first and second inputs 11, 12 to an analysis unit 9 which provides an output comprising a sequence of labels which are then transmitted to the neural net 5 (Figure 1). The distorted version of the signal is also sent to a segmenter 10, which divides the signal into individual segments (typically 20 milliseconds) corresponding to the labels. These segments are then transmitted to the vocal tract analyser 3 (Figure 1). The analysis unit 9 compares the "good" sample with the distorted sample and generates a sequence of labels representing the degree to which the distortion present in each segment is deemed by the model to be perceptible to a human listener. This analysis process will be described in general terms here, but the analysis techniques used in published International Patent Applications numbers WO94/00922, WO95/01011, and WO95/15035 are particularly suited.

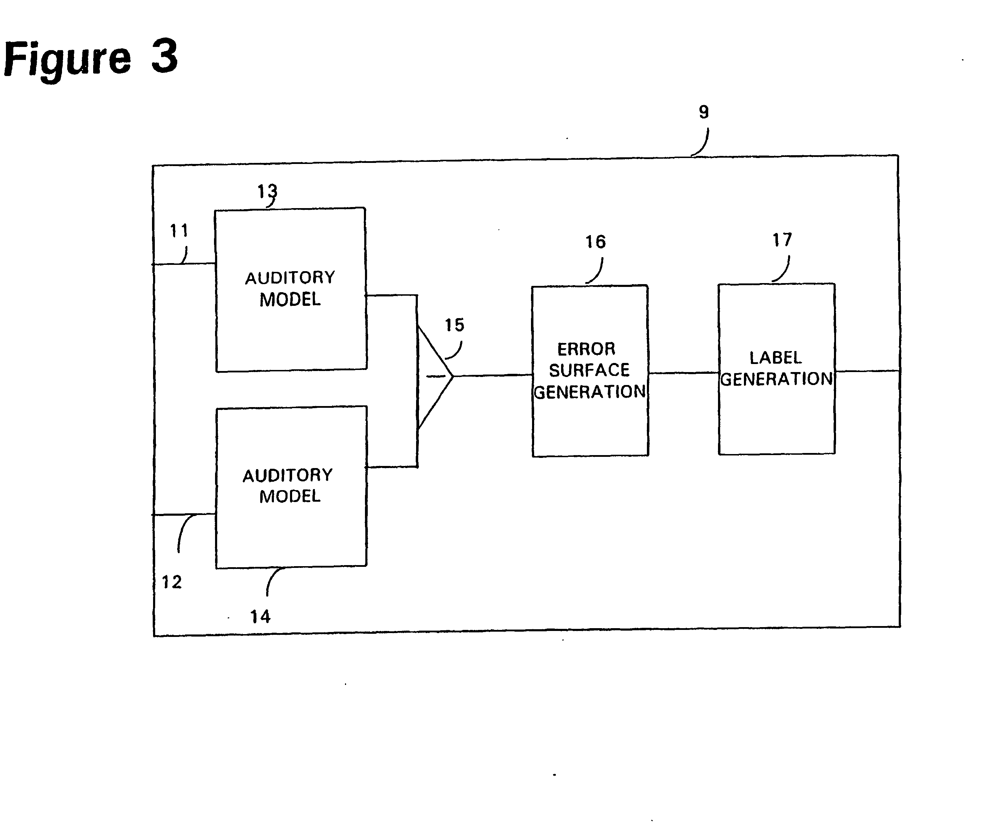

Figure 3 shows the analysis unit 9 in greater detail. The inputs 11 and 12 from the first and second stores (8a, 8b), respectively carrying the "good" signal and the distorted version of the good signal, are each fed through an auditory model (respectively 13, 14) and the outputs of the auditory models are compared in a comparator 15. It will be apparent to the skilled reader that corresponding passages of the good and distorted signal may instead be fed alternately through the same auditory model and comparison made between the outputs of this auditory model for the good and the distorted signal passages. It is in any case important that the same process is applied to both signals. The model generates a number of parameters which relates to the perceptual importance of the characteristics of individual signal segments. The process may involve separating the sample into various overlapping spectral components, using overlapping filters to model the phenomenon of simultaneous masking, in which a sound masks a quieter simultaneous sound which is close to it in frequency, and may also involve comparing each segment with one or more previous or subsequent segments to model the phenomenon of temporal masking, in which a quiet sound immediately preceding or following a louder sound is less perceptible than if the louder sound is not present.

As described in the aforementioned patent specifications, the auditory model process generates a series of values of the perceptual significance of each spectral and temporal component of the sample. Because the sample is analysed both spectrally and temporally, it is convenient to visualise this series of values as a surface, in which the perceptual significance of each spectral/temporal component is represented by defining time and pitch axes, and representing the perceptual significance for each time/spectral co-ordinate pair by the height of the surface above a plane defined by those axes. This surface is referred to herein as an "auditory surface". The values defining this surface are, of course, stored and processed digitally.

The two auditory surfaces corresponding to the "good" sample and the distorted sample are then compared in a comparator 15 to produce a series of error values, which are compiled to form an error surface in an error surface generation unit 16. As is described in detail in the above-mentioned published International Patent Specifications, the error surface is essentially a measure over a number of time segments and frequency or pitch bands (the individual ranges of the bands having been selected to be of equal perceptual significance, e.g. by conforming the signal to the Bark scale) in which the perceived magnitude of the sound signal is represented on an axis perpendicular to both the pitch and time axes. Different weightings may be applied to positive and negative values, for example to account for the differences in impairment which result from signal loss as compared to added noise. If no distortion is present at all, the error surface will have a value of zero over the entire surface. If, as in the example to be discussed, the values on the error surface are determined as the absolute magnitude of the difference (possibly weighted as described) between auditory model outputs, all values of the error surface are positive.

As described in the aforementioned patent applications, the characteristics of the error surface can be used to derive a value for the perceptual importance of the errors carried thereon. As described in particular in international patent application WO95/15035, this may be the absolute magnitude of the error aggregated over the error surface. A final weighted value for 'listening effort', $Y_{LE}$, can be derived:

$$\text{Error Activity, } E_A = 10\log\sum_{i=1}^{n}\sum_{j=1}^{m}|c(i,j)|$$

where c(i,j) is the error value in the $i$th of $n$ time segments and $j$th of $m$ pitch bands of the error surface to be analyzed. This gives an indication of the absolute amount of distortion present.

Suitable threshold values for error activity $E_A$ for individual segments can be used to determine whether a particular segment should be labelled as "well conditioned" or "ill conditioned". The properties of the error surface so generated are used to derive labels in a label generator 17 appropriate to the characteristics of the error surface defined by the error surface generator 16. These labels are produced in synchronism with the segmentation of the signal in the segmenter 10. The labels are output to the neural net 5 (Figure 1).

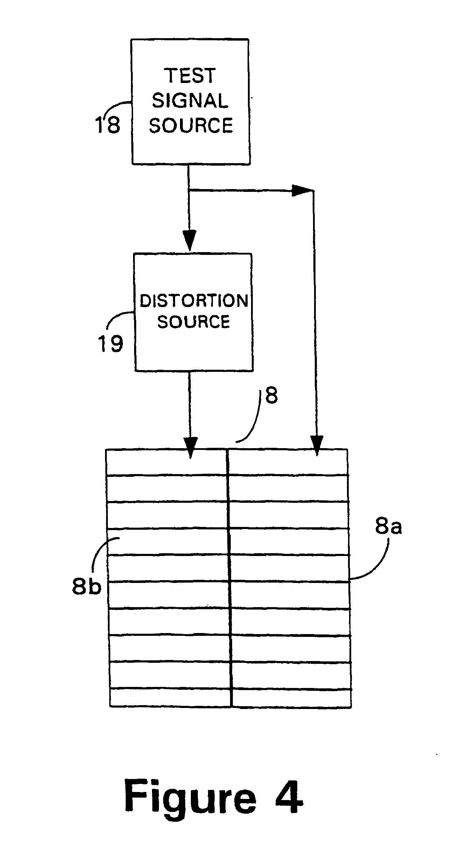

The source of distorted and "good" signals used in store 8 may be supplied from a pre-generated store. Various corpora of suitable data are already available, but further data may be readily generated. The generation of such data is relatively straightforward and is illustrated in Figure 4, in which an initial test signal from a source 18, which may comprise several samples of real speech, using different talkers in order to ensure a representative selection, is fed to the "good" store 8a. The same signal is also fed through the distortion generator 19. The resulting distorted signal is stored in the "distorted" signal store 8b. Various different sources of distortion may be applied. By using various permutations of different test signals and distortion types a large and representative corpus of test data can be generated to serve as training data to be supplied by the training data source 1.

Typical forms of distortion are supplied to the test signal by the distortion generator 19 in order to supply a representative selection of such signals to the training process. These distortions can be generated to simulate various effects. They may be generated algorithmically (i.e. by mathematical manipulation of the samples, for example to emulate a prototype system) or by passing the original signal through real apparatus, either in a test facility or in a real system such as a telecommunications network.

The labels supplied by the training apparatus 1 to the neural network 5 will inform the network of the nature of the training signal being transmitted, and therefore enable it to apply appropriate weightings to the various parameters stored in the store 4 in respect of data having these characteristics. Examples of different types of distorted and undistorted signals are supplied by the training apparatus 1, so that the output 6 may identify not only that a perceptible distortion is present, but also the extent of impairment caused by the distortion, that is, how disturbing its presence is to the listener.

In order to ensure that the network definition is accurate, test data for which a classification is known in advance may be supplied at input 2, the classification data generated by the network definition function in the neural network 5 then being compared (by means not shown) with the known classification data.

The audio system above has been described in relation to speech signals but suitable samples of other audio signals may also be used. Moreover other types of signals, for example video signals, may also be analysed in the same way, as will now be described.

In general, a video signal comprises an audio channel and three main vision components. In some specialised applications these components are the actual red, green and blue components of the image to be displayed. However, to allow compatibility between monochrome ("black-and-white") and colour systems, in most systems the vision components are a luminance ("brightness") signal, (used by both monochrome and colour receivers) and two "colour-difference" signals (used only by colour receivers). The two colour-difference signals are indicative of how much of the total luminance is contributed by, respectively, the blue and red components of the image. The third (green) component can be derived from the luminance and colour-difference signals, as it makes up the balance of the total luminance. The luminance signal and the colour-difference signals are used to generate instructions for the individual generators of the three single-colour images (red, green, blue) which, when superimposed, produce the full colour image.

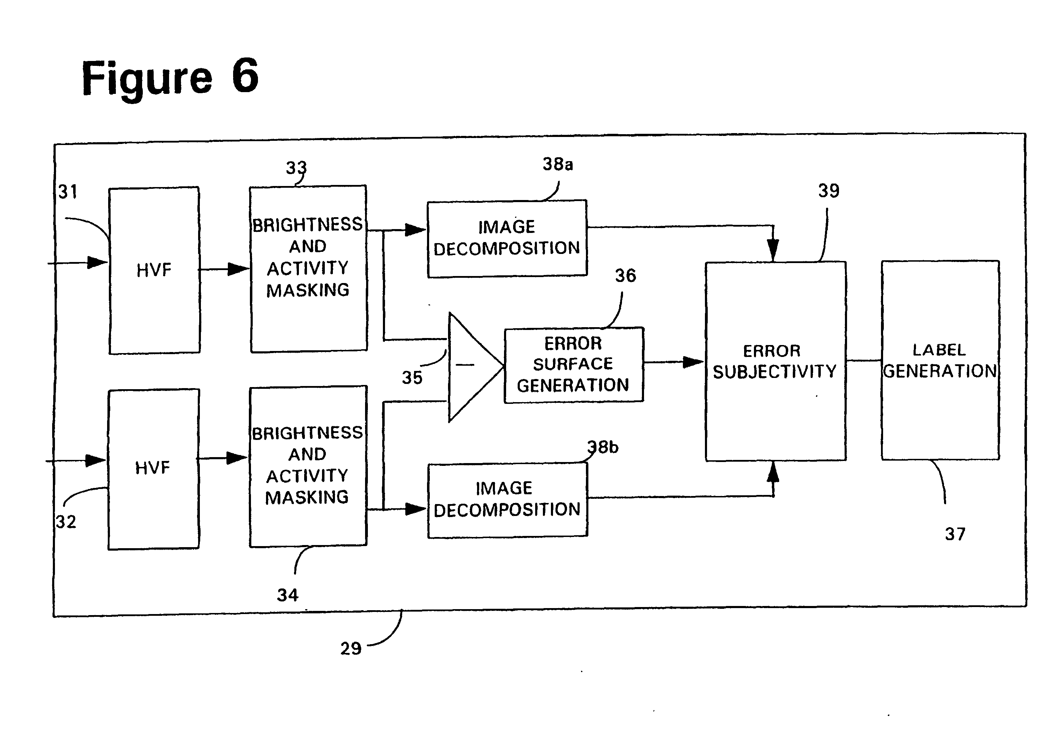

Figure 6 shows an apparatus similar to that shown in Figure 3, but configured for training for a video application. Sources of original and degraded signals are passed to respective human visual filters 31, 32 and then to respective brightness and activity and brightness masking units 33, 34. These signals are then compared in a comparison unit 35.

The output from the comparison unit 35 is passed to an error surface generation unit 36 which generates a series of values for the perceptual degree of error at different points in the image. There is thus generated an 'error brightness map', indicating how the perceptual degree of error varies over the image. The output from the error surface generation unit 36 provides an input to a label generation unit 37. The elements 31 to 37 all have equivalents in the speech analysis system shown in Figure 3, each component having the same final digit as its equivalent in Figure 3. In addition, the output relating to each signal is also passed from the masking units 33, 34 to a respective image decomposition unit 38a, 38b. The output from the error surface generation unit 36 is modified by applying weightings according to the output of the image decomposition units 38a, 38b in an error subjectivity unit 39, before being passed to the label generation unit 37.

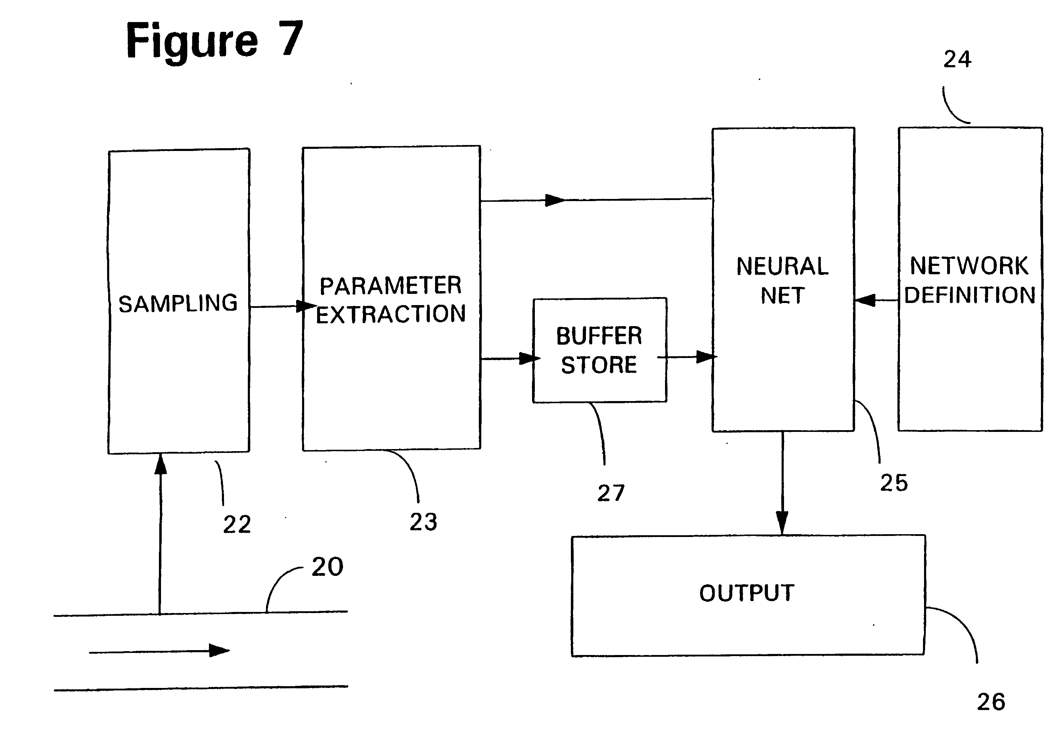

Figure 7 shows the basic elements of the trained apparatus, configured to analyse live data. These elements all have analogues in the speech analysis system shown in Figure 5, equivalent components having the same reference numeral, but in this Figure prefixed by a "2". The basic elements are similar to those shown in Figure 5, but for use with a video signal. A sampling unit 22 is connected to a source of a video signal 20. The sampling unit 22 in turn passes a signal to a parameter extraction unit 23 which in turn passes the resulting parameters by way of a buffer store 27 to a classification unit 25 which also has an input from a network definition function store 24. The classification unit 25 generates a classification of the input parameters determined according to the network definition function 24, which is transmitted to an output 26. A sample of the video signal is taken from a data stream 20 (e.g. 2Mbit/s per second), by means of the sampling unit 22. Each sample is then processed by the parameter extraction unit 23 which performs a number of functions in order to identify characteristics which indicate whether the video signal is well-conditioned or ill-conditioned. These parameters are passed to the classification unit 25 (typically a neural net) which generates an output 26 indicative of whether the original video signal is well or ill-conditioned.

The processes performed by the parameter extraction unit typically include spectral analysis, boundary detection and analysis, and correlation with temporally adjacent frames, to produce parameters relating to the spectral components, location of boundaries, and degree of correlation, including any spatial offset in the correlations.

These parameters are then processed by the neural net 25 to identify perceptually relevant patterns characteristic of the particular types of distortion. Parameters extracted may require correlation with temporally adjacent frames (either preceding or succeeding frames), and for this purpose a buffer store 27 of previous samples is stored for comparison with the most recently received sample. The parameters of the images produced by the unknown video signal are analysed by the neural net 25 to return a label at the output 26 which indicates the overall quality of the signal. Alternatively, the neural net may be programmed to generate labels indicative of parameters characteristic of specified types of distortion on which it has been trained.

In the preferred arrangement measures of both overall quality and type of distortion are applied. This allows a user to both identify what remedial action is necessary, and to prioritise such actions.

In this embodiment, the auditory model (13, 14) of the first embodiment is replaced by a model operating on the same principles but in which the relevant parameters are determined by human visual perceptual characteristics, rather than aural characteristics. The perceptual importance of a distortion depends on the visual context in which it appears. Masking effects may be significant within a given video frame, or between successive frames, depending on persistence of vision characteristics of human visual perception, etc. The segmentation time is conveniently defined by the frame rate, (typically 40 milliseconds for television systems using a frame rate of 25Hz: in a typical 'interlaced' system in which each frame is made up of two scans).

As each frame of a video transmission is in general very similar to the previous one, it would be appropriate in measuring masking and similar effects to compare segments of the video signal which relate to the same part of the image. The analysis process itself is analogous to the audio example above. Successive frames are analysed, transformed to a perceptually relevant frame of reference, using a human visual filter and masking models, the error is quantified and a label generated. The factors involved in the human visual filter model include spatial and temporal frequency resolution. The masking effects modelled are typically activity masking (large movements masking small fluctuations), and brightness masking.

There are certain forms of degradation which produce characteristic features on a video signal, and the presence of such features can be identified by the neural net 25 and used as an indicator that distortion may be present. However, the problem is more complex than with speech, because the video signal is more complex than a speech signal, and the original signal is not constrained in the way a speech signal is by physiological characteristics of the source of the signal. It is possible for a feature of a speech signal to be identified as being "non-speech-like" and therefore to identify with a reasonable degree of certainty that a distortion has been imposed. A video signal is not constrained in this way, so it is not as easy to identify with certainty whether the signal which is received has been distorted. Thus, in this embodiment the detection of a characteristic can only be indicative of a potential problem to be investigated. In particular, a distortion may have been introduced deliberately by the producer of the video image. For example, a 'blockiness' effect similar to that caused by data compression in the MPEG system can be produced deliberately by the producer of a video image, for example in order to preserve the anonymity of an individual depicted on the screen.

After extraction of the video sample, the image is analysed by the parameter extraction unit 23 to detect boundaries of features. Boundaries are typically perceived between areas (features) in each of which a characteristic of the image, usually colour or brightness, remains constant or changes gradually. For example, although each feature may shade gradually across itself, the boundary of a feature can be determined by an abrupt change in a characteristic. Typically, even if there are two objects of similar colours, and the shading of each feature varies across the feature, the boundary between the two objects is detectable by an abrupt change in the shading. Abrupt changes in a property of the signal are detectable as short-duration, broad bandwidth components in the spectral decomposition of the image. Distortions which affect the boundaries between different image elements, for example by blurring a boundary, or displacing a boundary thereby changing the shape of an object, are perceptually more significant than changes which take place within a body perceived by an observer as part of one image element. Such perceptually significant boundary changes include the complete disappearance of a boundary, or the appearance of a boundary where there should not be one.

In order to produce the network definition function used for controlling the neural net 25, image characteristics which are indicative of degradation and of significance to a human viewer, must be identified. In order to do this the training process is carried out in a perceptual analysis label generation unit 29, shown in block diagram form in Figure 6. This is similar in concept to the unit 9 shown in figures 2 and 3.

An original (undegraded) signal and a version of the same signal having a known degradation are both first passed through the respective HVFs (Human Visual Filters) 31, 32 which conform the images to what is perceptible by the human eye/brain system. The human visual filters 31, 32 modify the power (amplitude) of signals having certain spatial or temporal frequencies in accordance with the known responses of the human optical perceptual system, such that those frequencies which are less perceptually significant are reduced in power relative to those which are more perceptually significant. The human optical perceptual system is more responsive to certain spatial and temporal frequencies than others. For example, a regular pattern of stripes is difficult to resolve at a distance. Conversely, when a single stripe is so close that it subtends a large part of the field of vision, the overall pattern is also perceptually insignificant. At some intermediate position the pattern is more perceptually important than at those extremes. Note that what is significant is not the absolute distance, but the angle subtended at the eye by each element. This can be measured in terms of lines per unit of angle subtended at the eye. This value depends of course on the distance of the observer from the screen on which the image is to be displayed, and also on the size of the image itself, but since the ideal viewing distance is in any case determined by image size, the angle subtended at the eye by an image element would not be expected to differ markedly, whatever the image size. Similarly, temporal frequency affects perceptibility of images. Slow changes are imperceptible, whilst high frequency ones are perceived as a continuous signal of intermediate shade or brightness (a phenomenon known as 'persistence of vision'). Indeed video images rely on the inability of the human optical system to resolve high frequency spatial and temporal changes, as a video image is made up of small elements both in space (pixels) and time (frames). The human perceptual characteristics to be modelled by the filter have been well documented, for example in "Digital Pictures" by A.N. Netravali and B.G. Haskell, published in 1988 by Plenum Press, New York; ISBN 0-306-42791-5, see in particular Figure 4-3-12.

The image next goes through a masking process (33, 34 respectively). The masking effect which one image element has on another is complex, as it depends on the spatial frequency, intensity and orientation of the masking and masked features, both relative to each other and to the observer's eye. Certain bright or rapidly moving parts of the image may mask or enhance the perceptual significance of other parts of the image. The resulting masked image brightness is output from each of the masking models 33, 34 and then compared in the difference generator 35. This produces a value for error brightness for each point of the image, thus generating an error surface. Error brightness is the magnitude of the difference between the original and degraded signal (the original signal being brighter or less bright than the degraded signal) adjusted for masking and other perceptual effects. It is convenient to use the magnitude of the difference, as this allows a non-zero average value over the image, and/or over time, to be determined. It will be noted that the co-ordinate system for the error surface in this embodiment uses the 'x' and 'y' co-ordinates of the image itself, rather than the time and pitch axes of the audio embodiment described previously. Time-dependant or spatial frequency-dependant properties may be included in the system by adding further dimensions. The resulting data is not easy to represent graphically, but the parameters of such an error surface can nevertheless be generated and manipulated digitally. The term 'error surface' is used in this specification to mean any data describing how perceptual error level varies with one or more independently variable parameters.

It will be noted that because of the way a video image is generated, the 'x' and 'y' co-ordinates of the image may both be considered time axes, the scales of which are determined by the scanning rates in the x and y directions (32 microseconds per line and 40 milliseconds per frame for a typical 625-line video image).

The output from the activity and brightness masking systems 33 and 34 are also passed to respective image decomposition units 38a, 38b. These detect the boundaries between different elements of the image. As discussed above, degradations which affect boundaries of image elements (including the complete disappearance of a boundary, or the presence of a spurious one) are perceptually the most significant. By detecting an area of the image having a highly localised component containing a high spatial frequency in its spectral decomposition, a boundary of an image element can be identified. The output of the image decomposition units 38A, 38B is used in an error subjectivity generation unit 39 to weight the error brightness map generated by the error surface generation unit 36. These weighted values are then algorithmically processed in the error subjectivity generation unit 39, for example by summing them in a manner analogous to the process for deriving error activity value in the previous embodiment, to produce an overall error subjectivity value. The overall error subjectivity value is fed to the label generation unit 37 which generates an output according to the overall error subjectivity value (e.g. by reference to one or more thresholds).

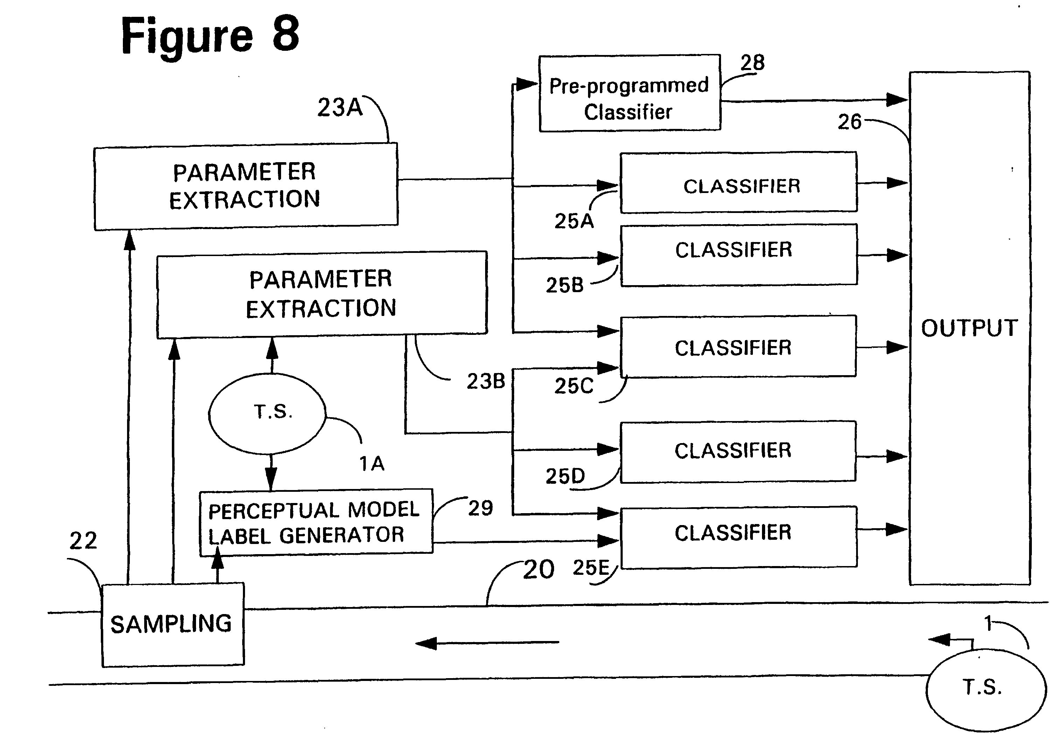

The arrangement of Figure 8 shows a modification of the system of Figure 7, in which the system is trainable by means of a test signal transmitted over the system to be monitored. This allows the trainable process to be fine-tuned for actual operating conditions, and also allows further training of the system to allow it to adapt as the monitored system evolves. Figure 8 also illustrates a multiple classifier architecture for the monitoring system. Although illustrated for handling video signals, it will be apparent that both the on-line training and the multiple classifier architecture are also suitable for use with the audio embodiment.

In Figure 8 there is shown a traffic carrying communications system 20 from which a sample of the signal traffic being carried can be taken by means of sampling unit 22. The sampled data are then analysed by means of a number of parameter extraction units 23A, 23B (two shown) each of which is arranged to measure an individual property e.g. spatial frequency, correlation, overall contrast level, etc. The parameters extracted thereby are passed to individual classification units 25A, 25B, 25C, 25D, 25E (typically neural nets). As shown, each classification unit makes use of parameters extracted from one or more of the parameter extraction units 23A, 23B etc. Each classification unit 25A, etc, delivers an output to an output co-ordination unit 26, which processes the outputs of the various classification units 25A, etc to generate a display. This arrangement allows each classifier (neural net) to be individually configured to identify the presence of a particular characteristic, thereby producing a simple binary (yes/no) output. By combining the outputs of such classifiers, a complex output can be generated, e.g. triggering an alert if a predetermined number of the classifiers generate an output.

The system also provides two training sample sources 1, 1 A, one of which is positioned elsewhere in the communication system 20, and the other of which is positioned locally to the parameter analysis units 23A, 23B to provide a direct input thereto.

Also provided is a pre-programmed characteristic identification unit 28, which is shown as having an input from the parameter extraction unit 23A.

The classification units 25A to 25E are arranged as parallel classification units, each one being configured to identify a particular characteristic in the signal received by the sampling unit 22, in order to generate an output to the output co-ordination unit 26, indicative of whether that property is present or not. The property is itself measured according to the presence or absence of one or more parameters identified by the parameter extraction units 23A, 238. For example, one classification unit 25A may identify whether a particular type of distortion is present, whilst another one will identify a second type of distortion. Further classification units may identify the perceptual severity of the overall distortion.

As the telecommunications 20 network develops, new types of signal processing techniques may take place within the network, having different characteristics which may, in certain circumstances, result in new characteristic distortions. In order to allow the analysis system to be retrained to identify such distortions, and to adapt to changes in the existing network, a reconfiguration process is adopted. For this purpose one channel is temporarily taken out of use, in order to allow it to carry a training sample provided by a training sample generation unit 1. The training sample is extracted by means of the sampling unit 22 and compared with another sample, generated by a source 1A at the monitoring point, identical to the sample received over the communications link.

Associated with the source 1 A of the second (locally generated) training data, is a perceptual model label generation unit 29 (as previously shown in detail in Figure 6) which compares the signal received over the communications link 20 from the training source generation unit 1 with the locally generated training signal, in order to generate quality labels which are input to the trainable classification unit 25E. These labels are associated with the corresponding parameters generated by the parameter extraction unit 23B, in order to produce a network definition function for the classification unit 25E. Following this training process, the resulting network definition function is used to classify unknown parameter patterns corresponding to unknown samples extracted from the communications link 20 by the sampling unit 22. In this way classification units may be added to the original system, or existing ones reprogrammed, as the communication system 20 develops.

Not all the classification units are necessarily programmed by means of a training process. Where the characteristics are already known, a classification unit 28 may be pre-programmed to identify suitable parameters extracted by the parameter extraction unit 23A, 23B, etc. The analysis unit 28 operates in a similar manner to the trainable units 25A to 25E, but is pre-programmed to recognise known characteristics of particular types of signal degradation. For example, it is known that data compression may result in boundary blurriness, blockiness, fuzziness, jerkiness, and colour aberrations. In particular, in a video image involving much rapid movement, the MPEG signal compression system deals with overloads resulting from rapid movement in the image by reducing the pixel resolution, resulting in "blockiness", with characteristic rectilinear boundaries typically of $8 \times 8$ pixels. Multipath interference will produce two boundaries displaced by a fixed horizontal distance (known as "ghosting"). Fuzziness will tend to spread out the high spatial-frequency components of the edges themselves. Colour blurring may result in discrepancies between the edges defined by the different coloured components of the image. Low levels of contrast in one colour component, over the image as a whole, are indicative of a colour aberration (the image being tinted by the colour in question, or its chromatic complement. Low levels of contrast in the image as a whole are indicative of signal clipping. Complete correlation between the three colour components of the image is indicative of a monochrome image, which may indicate loss of the signal band carrying the colour information.

The degree of correlation between successive frames may reveal further types of degradation. For example large random differences between each successive frame are indicative of the presence of an interfering signal. The effect of randomly appearing light and dark spots on a video image (known as "snow") is an example of such a feature. This would be difficult to detect from a single sample, because the location of the individual spots is random. If the sample is completely different from the previous sample then this probably signifies that a scene change (change of camera shot) has taken place, and no useful temporal correlations would be available in such cases. However, if a scene is largely unchanged i.e. each frame is strongly correlated with the previous frame, but has differences from the previous frame which are neither correlated with each other, nor with similar differences from earlier frames, then this is an indication that white noise ("snow") is present in the signal.

Another time-dependent correlation which may be identified is a jerky image, caused by signal compression. This is particularly likely when the image is processed on a 'by exception' basis - each image is the same as the previous one, with certain differences, and it is only the differences which are transmitted. For a rapidly changing image, the data rate can be too slow to define all the necessary changes for each frame. The movement of features across an image is normally smooth. If a feature moves stepwise, this is indicative of a jerky image. Jerkiness produces edges whose positions correlate from one image to the next in a characteristic way, wherein one or more elements in each image of a group of successive images are in the same position, but elements in images of successive groups are displaced from each other.

A change of scene, identifiable by a complete and non-transient change in the positions of all edges, and/or a change in some characteristic such as average brightness, may be expected to correlate with a change in the overall characteristics of the audio channel (e.g. its loudness). An absence of such correlations over a number of such changes may indicate interference on the audio channel, or indeed loss of the audio signal.

In the classification unit 28 the parameters acquired from the parameter unit 23A are analysed to output a label for the output co-ordinator 26 indicative of the presence of parameters characteristic of specified types of distortion. So, for example, parameters identifying $8 \times 8$ pixel blocks would indicate overloading of the MPEG coding algorithm. A lack of clearly-defined high frequency content in the spectrum of the signal is indicative of an absence of clearly-defined edges, suggesting a fuzzy or out-of focus image. A high correlation between closely-spaced edge features suggests ghosting (multipath interference), etc. Features which do not correlate from one image to the next indicate a noisy signal ("snow").

As is illustrated for the trainable classification units 25A to 25E, several pre-programmed classification units 28 may also be provided, each dedicated to identifying a particular characteristic.

**Claims**

1. Training apparatus for training a signal classification apparatus (5) of the type arranged to detect predetermined components of a signal, characteristic of distortion being present in the signal, and for generating a classification indicative of the severity and/or types of distortion present, **characterised in that** the training apparatus comprises means (8) for providing a training sequence comprising a first signal and a distorted version of the first signal, analysis means (9) for receiving the training sequence and generating a distortion perception measure for indicating the extent to which the distortion would be perceptible to a human observer, and means for applying the distortion perception measure and the distorted signal to the signal classification apparatus (5) to determine the classifications to be applied to signals subsequently input to the signal classification apparatus.

2. Training apparatus according to claim 1, in which the analysis means (9) comprises measurement means (13,14) for estimating the effect which would be produced on the human sensory system by distorted and undistorted versions of the same signal, means (15) for determining the differences between the said effects, and means (17) for generating said distortion perception measure in dependence upon said difference.

3. Training apparatus according to claim 1 or claim 2, in which the analysis means has means for generating a distortion perception measure whose value is dependent upon perceptual significance to a human observer of said distortion, and dependent non-linearly upon the amplitude of said distortion.

4. Training apparatus according to any preceding claim, in which the analysis means (9) comprises measurement means (13,14) for generating a plurality of spectral component signals of said test signal and/or said distorted signal.

5. Training apparatus according to claim 4, in which the measurement means (13,14) has means for estimating, for each spectral component signal, the masking effect which that spectral component signal would produce on the human sensory system.

6. Training apparatus according to any preceding claim, in which the analysis means includes measurement means (13,14) for estimating the effect which said distortion would produce on the human sensory system taking into account the temporal persistence of said effect.

7. Training apparatus according to claim 6, in which the analysis means (9) comprises measurement means (13,14) for generating a time sequence of successive processed signal segments from said test signal and/or said distorted signal, the value of at least some signal segments being generated in dependence upon portions of said test signal and/or distorted signal which precede and/or succeed said signal segments.

8. Training apparatus according to any preceding claim, in which the analysis means (9) comprises measurement means (13,14) for decomposing the distorted signal into a plurality of spectral component bands, the spectral component bands being shaped to provide spectral masking, and for calculating the temporal masking of the signal due to preceding and/or succeeding temporal portions thereof; means (15,16) for forming, for each of the spectral component signals, a representation of the difference between the component signal of the distorted signal and a correspondingly calculated component of the test signal; and calculation means (17) for generating said distortion perception measure from said difference representation.

9. Training apparatus according to claim 8 in which the calculation means (17) generates a measure of the spectral and temporal distribution of the distortion from said difference signal.

10. Training apparatus according to any of claims 1 to 9, comprising means for generating classifications indicative of the type of distortion that is present.

11. Training apparatus according to claim 10, comprising a first trainable processing apparatus for identifying the overall quality of the signal, and a second trainable processing apparatus for identifying the type or types of distortion present.

12. Training apparatus according to any preceding claim, configured to analyse speech signals.

13. Training apparatus according to any of claims 1 to 12, configured to analyse video signals.

14. Training apparatus according to claim 13, comprising means for identifying parts of the image represented by the video signal having the greatest perceptual significance to a human observer, and means for weighting those parts of the image in the input to the analysis means.

15. Training apparatus according to claim 14, having means (38) for identifying boundaries of image elements, and means for weighting those parts of the image containing such boundaries as being of greater perceptual significance.

16. Training apparatus according to claim 13, 14 or 15, comprising means (31, 32) for analysing spatial frequencies within the video images.

17. Training apparatus according to claim 16 when dependent on claim 15, comprising means for identifying high frequency spatial frequency components in the image.

18. Training apparatus according to any preceding claim, comprising means to generate from the training sequence a plurality of distortion perception measures for application to a plurality of trainable processing apparatuses.

19. Signal classification apparatus for detecting predetermined signal components in a signal, the components being characteristic of distortion being present in the signal, and having means for generating an output indicative of the presence, severity and/or type of distortion present, comprising a training apparatus according to any preceding claim for programming the signal classification apparatus to identify such distortions.

20. Signal classification apparatus according to claim 19, comprising two or more signal classification elements, at least one of which is programmable by the training apparatus.

21. Signal classification apparatus according to claim 20, wherein at least one signal classification element is preprogrammed to identify a predetermined distortion type.

22. Apparatus according to claim 21, wherein a pre-programmed signal classification element is arranged to identify the spreading out, or complete absence, of elements of a video image having high spatial frequencies, indicative of the image being blurred.

23. Apparatus according to claim 21 or 22, wherein a pre-programmed signal classification element is arranged to identify boundaries of elements of a video image which are moving, and weighting those boundaries of the image where such movement occurs as an input to the distortion perception measurement means.

24. Apparatus according to any of claim 21 to 23, wherein a pre-programmed signal classification element is arranged to identify in a video image rectilinear blocks, each block being of uniform colour and a predetermined size.

**25.** Apparatus according to any of claims 21 to 24, wherein a pre-programmed signal classification element is arranged to identify correlations in boundaries displaced from each other within a video image, indicative of multipath interference in the video signal.

**26.** Apparatus according to claims 21 to 25, wherein a pre-programmed signal classification element is arranged to identify correlations between groups of successive video images indicative of jerky motion.

**27.** Apparatus according to any of claims 21 to 26, wherein a pre-programmed signal classification element is arranged to identify individual pixel elements of an image which are uncorrelated with other picture elements of the same image, and uncorrelated with similar elements in successive images, indicative of white noise appearing on the input video signal.

**28.** A method for training a trainable signal classification process of the type in which predetermined components of a signal characteristic of distortion being present in the signal are detected, and a classification indicative of the severity and/or types of distortion present is generated, the training method being **characterised by** the steps of providing a training sequence comprising a first signal (8a) and a distorted version (8b) of the first signal, measuring the extent to which the distortion of the signal will be perceptible to a human observer (16), and defining a classification operation (17) in accordance with the result of said measurement, the classification operation being arranged to classify signals, subsequently input to the signal classification process in accordance with the presence or absence of perceptually significant distortion.

**29.** A method according to claim 28, in which the measurement process estimates the effect which would be produced on the human sensory system by distorted and undistorted versions of the same signal, determines the differences between the said effects, and generates said distortion perception measure in dependence upon said difference.

**30.** A method according to claim 28 or claim 29 in which the measurement process generates said distortion perception measure to depend upon the significance to a human observer of said distortion, and to depend non-linearly upon the amplitude of said distortion.

**31.** A method according to claim 28, 29 or 30 in which the measurement process generates a plurality of spectral component signals of said test signal and/or said distorted signal.

**32.** A method according to claim 31, in which the measurement process estimates, for each spectral component signal, the masking effect which that spectral component signal would produce on the human sensory system.

**33.** A method according to claim 28, 29, 30, 31 or 32, in which said measurement process estimates the effect which said distortion would produce on the human sensory system taking into account the temporal persistence of said effect.

**34.** A method according to claim 28, 29, 30, 31, 32 or 33 in which the measurement process decomposes the distorted signal into a plurality of spectral component bands, the spectral component bands being shaped to provide spectral masking; calculates the temporal masking of the signal due to preceding and/or succeeding temporal portions thereof; forms, for each of the spectral component signals, a representation of the difference between the component signal of the distorted signal and a correspondingly calculated component of the test signal; and generates said distortion perception measure from said difference representation.

**35.** A method according to claim 34 in which the analysis process generates a measure of the spectral and temporal distribution of the distortion from said difference signal.

**36.** A method according to any of claims 28 to 37 the step of generating from classification operation an indication of the type of distortion that is present.

**37.** A method according to claim 36 comprising the steps of identifying the overall quality of the signal, and identifying the type or types of distortion present.

**38.** A method according to any of claims 28 to 37, in which the signals are audio signals.

**39.** A method according to claim 38, in which the signals are speech signals.

**EP 0 879 527 B1**

40. A method according to any of claims 28 to 37, in which the signals are video signals.

41. A method according to claim 40 wherein the signals are analysed in segments corresponding to individual frames of the video signal.

42. A method according to claim 40 or 41 comprising the steps of identifying parts of the image represented by the signal of relatively greater perceptual significance to a human observer, and providing a weighting for those parts of such images as an input to the distortion perception measurement process.

43. A method according to claim 42, comprising the steps of identifying boundaries of image elements, and weighting those parts of the image containing such boundaries as being of greater perceptual significance.

44. A method according to claim 41, 42 or 43, comprising the step of analysing spatial frequencies within the video images.

45. A method according to claim 44 when dependent on claim 43, comprising the step of identifying high frequency spatial frequency components in the image.

46. A method according to any of claims 41 to 45, comprising the steps of analysing the video image in terms of three different coloured images, and identifying correlations, or lack of correlations, between the images.

47. A method of training a trainable signal analysis apparatus, comprising the steps of:

transmitting a first training sequence from a remote location, over a network to be monitored, to a monitoring location;
generating a second, identical, training sequence at the monitoring location;
performing the analysis process of any of claims 28 to 46 to measure the perceptual degree of distortion in the training sequence received at the monitoring location from the remote location, by comparison with the second training sequence;
classifying the resulting measures according to said perceptual degree of distortion; and
configuring the trainable process according to the resulting classification.

48. Method according to any of claims 28 to 47, wherein the training signal is applied to a plurality of perceptual analysis processes for generating a plurality of classification operations, each for applying to an individual trainable process such that an output can be generated according tom the combined output of the trainable processes.

49. A signal classification apparatus (25) for detecting and classifying distorsions occuring in signals input to the apparatus, in accordance with classification data, **characterised in that** the classification data has been generated by a training method according to any of claims 28 to 48.

**Patentansprüche**

1. Trainingsvorrichtung zum Training einer Signalklassifikationsvorrichtung (5) des Typs, der ausgebildet ist, vorgegebene Komponenten eines Signals zu erfassen, die charakteristisch für eine in dem Signal vorhandene Verzerrung sind, und eine Klassifikation zu erzeugen, welche das Ausmaß und/oder die Typen der vorhandenen Verzerrung anzeigt, **dadurch gekennzeichnet, dass** die Trainingsvorrichtung aufweist Mittel (8) zum Bereitstellen einer Trainings-Sequenz mit einem ersten Signal und einer verzerrten Version des ersten Signals, Analyse-Mittel (9) zum Empfangen der Trainings-Sequenz und zum Erzeugen eines Verzerrungs-Wahrnehmungs-Maßes zur Anzeige des Bereiches, bis zu dem die Verzerrung für einen menschlichen Beobachter wahrnehmbar wäre, und Mittel zum Anwenden des Verzerrungs-Wahrnehmungs-Maßes und des verzerrten Signals auf die Signalklassifikationsvorrichtung (5), um die auf Signale, die aufeinander folgend in die Signalklassifikationsvorrichtung eingegeben werden, anzuwendenden Klassifikationen zu bestimmen.

2. Trainingsvorrichtung gemäß Anspruch 1, wobei das Analyse-Mittel (9) aufweist Messungs-Mittel (13, 14) zum Schätzen des Effekts, der von verzerrten und nicht verzerrten Versionen des gleichen Signals auf das menschliche Sinnessystem erzeugt würde, Mittel (15) zum Ermitteln der Unterschiede zwischen den Effekten, und Mittel (17) zum Erzeugen des Verzerrungs-Wahrnehmungs-Maßes abhängig von dem Unterschied.

3. Trainingsvorrichtung gemäß Anspruch 1 oder Anspruch 2, wobei das Analyse-Mittel Mittel zum Erzeugen eines Verzerrungs-Wahrnehmungs-Maßes aufweist, deren Wert von einer wahrnehmbaren Bedeutung der Verzerrung für einen menschlichen Beobachter und nicht-linear von der Amplitude der Verzerrung abhängt.

4. Trainings Vorrichtung gemäß einem vorhergehenden Anspruch, wobei das Analyse-Mittel (9) Messungs-Mittel (13, 14) zum Erzeugen einer Vielzahl von Signalen der Spektralanteile des Test-Signals und/oder des verzerrten Signals aufweist.

5. Trainingsvorrichtung gemäß Anspruch 4, wobei das Messungs-Mittel (13, 14) Mittel aufweist, um für jedes Signal der Spektralanteile den Maskierungseffekt zu schätzen, den das Signal des Spektralanteils auf das menschliche Sinnessystem erzeugen würde.

6. Trainingsvorrichtung gemäß einem vorhergehenden Anspruch, wobei das Analyse-Mittel (9) Messungs-Mittel (13, 14) umfasst, um den Effekt zu schätzen, den die Verzerrung auf das menschliche Sinnessystem erzeugen würde, unter Berücksichtigung der zeitlichen Wirkungsdauer des Effekts.

7. Trainingsvorrichtung gemäß Anspruch 6, wobei das Analyse-Mittel (9) Messungs-Mittel (13, 14) umfasst, um eine Zeitreihe von nacheinander verarbeiteten Signalsegmenten aus dem Testsignal und/oder dem verzerrten Signal zu erzeugen, wobei der Wert von zumindest einigen Signalsegmenten abhängig von Teilen des Testsignals und/ oder des verzerrten Signals, die den Signalsegmenten vorausgehen und/oder nachfolgen, erzeugt wird.

8. Trainingsvorrichtung gemäß einem vorhergehenden Anspruch, wobei das Analyse-Mittel (9) umfasst Messungs-Mittel (13, 14), um das verzerrte Signal in eine Vielzahl von Spektralanteilbänder zu zerlegen, wobei die Spektralanteilbänder geformt sind, eine spektrale Maskierung zu liefern, und um die zeitliche Maskierung des Signals aufgrund vorausgehender und/oder nachfolgender zeitlicher Teile davon zu berechnen; Mittel (15, 16), um für jedes der Signale der Spektralanteile eine Darstellung des Unterschieds zwischen dem Anteilssignal des verzerrten Signals und einem entsprechend berechneten Anteil des Testsignals zu bilden; und Berechnungs-Mittel (17), um das Verzerrungs-Wahrnehmungs-Maß aus der Darstellung des Unterschieds zu erzeugen.

9. Trainingsvorrichtung gemäß Anspruch 8, wobei das Berechnungs-Mittel (17) ein Maß der spektralen und zeitlichen Verteilung der Verzerrung aus dem Unterschieds-Signal erzeugt.

10. Trainingsvorrichtung gemäß einem der Ansprüche 1 bis 9 mit Mitteln zum Erzeugen von Klassifikationen, die den Typ der vorhandenen Verzerrung anzeigen.

11. Trainingsvorrichtung gemäß Anspruch 10 mit einer ersten lernfähigen Verarbeitungsvorrichtung zur Identifizierung der Gesamtqualität des Signals und einer zweiten lernfähigen Verarbeitungsvorrichtung zur Identifizierung des Typs oder der Typen der vorhandenen Verzerrung.

12. Trainingsvorrichtung gemäß einem vorhergehenden Anspruch, die ausgebildet ist, Sprachsignale zu analysieren.

13. Trainingsvorrichtung gemäß einem der Ansprüche 1 bis 12, die ausgebildet ist, Videosignale zu analysieren.

14. Trainingsvorrichtung gemäß Anspruch 13 mit Mitteln zur Identifizierung von Teilen des von dem Videosignal dargestellten Bildes mit der höchsten wahrnehmbaren Bedeutung für einen menschlichen Beobachter, und Mitteln, um die Teile des Bildes bei der Eingabe an das Analyse-Mittel zu gewichten.

15. Trainingsvorrichtung gemäß Anspruch 14 mit Mitteln (38) zur Identifizierung von Begrenzungen von Bildelementen, und Mitteln, um die Teile des Bildes mit derartigen Begrenzungen mit einer höheren wahrnehmbaren Bedeutung zu gewichten.

16. Trainingsvorrichtung gemäß Anspruch 13, 14 oder 15 mit Mitteln (31, 32) zur Analyse von Ortsfrequenzen in den Videobildern.

17. Trainingsvorrichtung gemäß Anspruch 16, wenn abhängig von Anspruch 15, mit Mitteln zur Identifizierung von hochfrequenten Ortsfrequenzkomponenten in dem Bild.

18. Trainingsvorrichtung gemäß einem vorhergehenden Anspruch mit Mitteln, um aus der Trainings-Sequenz eine Vielzahl von Verzerrungs-Wahrnehmungs-Maßen zur Anwendung auf eine Vielzahl von lernfähigen Verarbeitungsvorrichtungen zu erzeugen.

19. Signalklassifikationsvorrichtung zum Erfassen vorgegebener Signalkomponenten in einem Signal, wobei die Komponenten durch eine in dem Signal vorhandene Verzerrung charakterisiert sind, und wobei die Signalklassifikationsvorrichtung Mittel aufweist zum Erzeugen einer Ausgabe, die das Vorhandensein, das Ausmaß und/ oder die Typen der vorhandenen Verzerrung anzeigt, die eine Trainingsvorrichtung gemäß einem vorhergehenden Anspruch aufweist, um die Signalklassifikationsvorrichtung für die Identifizierung derartiger Verzerrungen zu programmieren.

20. Signalklassifikationsvorrichtung gemäß Anspruch 19 mit zwei oder mehreren Signalklassifikationselementen, von denen zumindest ein Element von der Trainingsvorrichtung programmierbar ist.

21. Signalklassifikationsvorrichtung gemäß Anspruch 20, wobei zumindest ein Signalklassifikationselement vorprogrammiert ist, um einen vorgegebenen Typ von Verzerrung zu identifizieren.

22. Vorrichtung gemäß Anspruch 21, wobei ein vorprogrammiertes Signalklassifikationselement ausgebildet ist, die Verbreiterung, oder vollständige Abwesenheit, von Elementen eines Videobildes mit hohen Ortsfrequenzen zu identifizieren, was anzeigt, dass das Bild unscharf ist.

23. Vorrichtung gemäß Anspruch 21 oder Anspruch 22, wobei ein vorprogrammiertes Signalklassifikationselement ausgebildet ist, Begrenzungen von sich bewegenden Elementen eines Videobildes zu identifizieren und die Begrenzungen des Bildes, wo eine derartige Bewegung stattfindet, als eine Eingabe an das Verzerrungs-Wahrnehmungs-Maß-Mittel zu gewichten.

24. Vorrichtung gemäß einem der Ansprüche 21 bis 23, wobei ein vorprogrammiertes Signalklassifikationselement ausgebildet ist, in einem Videobild geradlinige Blocks zu identifizieren, wobei jeder Block einfarbig ist und eine vorgegebene Größe hat.

25. Vorrichtung gemäß einem der Ansprüche 21 bis 24, wobei ein vorprogrammiertes Signalklassifikationselement ausgebildet ist, Korrelationen in voneinander versetzten Begrenzungen in einem Videobild zu identifizieren, die eine Mehrweg-Interferenz in dem Videosignal anzeigen.

26. Vorrichtung gemäß der Ansprüche 21 bis 25, wobei ein vorprogrammiertes Signalklassifikationselement ausgebildet ist, Korrelationen zwischen Gruppen aufeinander folgender Videobilder zu identifizieren, die eine ruckartige Bewegung anzeigen.

27. Vorrichtung gemäß einem der Ansprüche 21 bis 26, wobei ein vorprogrammiertes Signalklassifikationselement ausgebildet ist, einzelne Pixelelemente eines Bildes, die nicht mit anderen Bildelementen desselben Bildes korrelieren und nicht mit ähnlichen Elementen in aufeinander folgenden Bildern korrelieren, zu identifizieren, die ein auf dem eingegebenen Videosignal auftretendes weißes Rauschen anzeigen.

28. Verfahren zum Trainieren eines lernfähigen Signalklassifikationsprozesses des Typs, in dem vorgegebene Komponenten eines Signals erfasst werden, die charakteristisch für eine in dem Signal vorhandene Verzerrung sind, und eine Klassifikation erzeugt wird, welche das Ausmaß und/oder die Typen der vorhandenen Verzerrung anzeigt, wobei das Trainingsverfahren **gekennzeichnet ist durch** die Schritte Bereitstellen einer Trainingssequenz mit einem ersten Signal (8a) und einer verzerrten Version (8b) des ersten Signals, Messen des Bereiches, bis zu dem die Verzerrung des Signals für einen menschlichen Beobachter (16) wahrnehmbar ist, und Definieren eines Klassifikationsvorgangs (17) in Übereinstimmung mit dem Ergebnis der Messung, wobei der Klassifikationsvorgang ausgebildet ist, Signale, die aufeinander folgend in den Signalklassifikationsprozess eingegeben werden, in Übereinstimmung mit dem Vorhandensein oder der Abwesenheit einer wahrnehmbar signifikanten Verzerrung zu klassifizieren.

29. Verfahren gemäß Anspruch 28, wobei der Messvorgang den Effekt schätzt, der von verzerrten und nicht verzerrten Versionen des gleichen Signals auf das menschliche Sinnessystem erzeugt würde, die Unterschiede zwischen den Effekten ermittelt, und das Verzerrungs-Wahrnehmungs-Maß abhängig von dem Unterschied erzeugt.

30. Verfahren gemäß Anspruch 28 oder Anspruch 29, wobei der Messvorgang das Verzerrungs-Wahrnehmungs-Maß erzeugt, die von der Bedeutung der Verzerrung für einen menschlichen Beobachter und nicht-linear von der Amplitude der Verzerrung abhängt.

31. Verfahren gemäß Anspruch 28, 29 oder 30, wobei der Messvorgang eine Vielzahl von Signalen der Spektralanteile des Test-Signals und/oder des verzerrten Signals erzeugt.

32. Verfahren gemäß Anspruch 31, wobei der Messvorgang für jedes Signal der Spektralanteile den Maskierungseffekt schätzt, den das Spektralanteilssignal auf das menschliche Sinnessystem erzeugen würde.

33. Verfahren gemäß Anspruch 28, 29, 30, 31 oder 32, wobei der Messvorgang den Effekt schätzt, den die Verzerrung auf das menschliche Sinnessystem erzeugen würde, unter Berücksichtigung der zeitlichen Wirkungsdauer des Effekts.

34. Verfahren gemäß Anspruch 28, 29, 30, 31, 32 oder 33, wobei der Messvorgang das verzerrte Signal in eine Vielzahl von Spektralanteilbänder zerlegt, wobei die Spektralanteilbänder geformt sind, eine spektrale Maskierung zu liefern; die zeitliche Maskierung des Signals aufgrund vorausgehender und/oder nachfolgender zeitlicher Teile davon berechnet; für jedes der Signale der Spektralanteile eine Darstellung des Unterschieds zwischen dem Anteilssignal des verzerrten Signals und einem entsprechend berechneten Anteil des Testsignals bildet; und das Verzerrungs-Wahrnehmungs-Maß aus der Darstellung des Unterschieds zu erzeugt.

35. Verfahren gemäß Anspruch 34, wobei der Analysevorgang ein Maß der spektralen und zeitlichen Verteilung der Verzerrung aus dem Unterschieds-Signal erzeugt.

36. Verfahren gemäß einem der Ansprüche 28 bis 37 mit dem Schritt des Erzeugens einer Anzeige des Typs der vorhandenen Verzerrung aus einem Klassifikationsvorgang.

37. Verfahren gemäß Anspruch 36 mit den Schritten der Identifizierung der Gesamtqualität des Signals und der Identifizierung des Typs oder der Typen der vorhandenen Verzerrung.

38. Verfahren gemäß einem der Ansprüche 28 bis 37, wobei die Signale Audio-Signale sind.

39. Verfahren gemäß Anspruch 38, wobei die Signale Sprachsignale sind.

40. Verfahren gemäß einem der Ansprüche 28 bis 37, wobei die Signale Video-Signale sind.

41. Verfahren gemäß Anspruch 40, wobei die Signale in Abschnitten analysiert werden, die den einzelnen Rahmen des Video-Signals entsprechen.

42. Verfahren gemäß Anspruch 40 oder Anspruch 41 mit den Schritten Identifizieren von Teilen des von dem Signal dargestellten Bildes mit einer relativ höheren wahrnehmbaren Bedeutung für einen menschlichen Beobachter, und Vorsehen einer Gewichtung für die Teile derartiger Bilder als eine Eingabe an den Vorgang des Verzerrungs-Wahrnehmungs-Maßes.

43. Verfahren gemäß Anspruch 42 mit den Schritten Identifizieren von Begrenzungen von Bildelementen, und Gewichten der Teile des Bildes, die derartige Begrenzungen aufweisen, mit höherer wahrnehmbarer Bedeutung.

44. Verfahren gemäß Anspruch 41, 42 oder 43 mit dem Schritt der Analyse von Ortsfrequenzen in den Videobildern.

45. Verfahren gemäß Anspruch 44, wenn abhängig von Anspruch 43, mit dem Schritt der Identifizierung von hochfrequenten Ortsfrequenzkomponenten in dem Bild.

46. Verfahren gemäß einem der Ansprüche 41 bis 45 mit den Schritten Analysieren des Videobildes hinsichtlich drei unterschiedlich farbiger Bilder und Identifizieren von Korrelationen oder das Fehlen von Korrelationen zwischen den Bildern.

47. Verfahren zum Trainieren einer lernfähigen Signalanalysevorrichtung mit den Schritten:

Übertragen einer ersten Trainingssequenz von einem entfernten Standort über ein zu überwachendes Netzwerk an einen Überwachungsstandort;

Erzeugen einer zweiten identischen Trainingssequenz an dem Überwachungsstandort;

Durchführen des Analysevorgangs nach einem der Ansprüche 28 bis 46, um den wahrnehmbaren Grad der Verzerrung in der von dem entfernten Standort an dem Überwachungsstandort empfangenen Trainingssequenz durch Vergleich mit der zweiten Trainingssequenz zu messen;

Klassifizieren der daraus resultierenden Messungen gemäß dem wahrnehmbaren Grad der Verzerrung; und

Konfigurieren des lernfähigen Vorgangs gemäß der resultierenden Klassifikation.

**48.** Verfahren gemäß einem der Ansprüche 28 bis 47, wobei das Trainingssignal auf eine Vielzahl von Wahrnehmungs-Analyse-Prozesse angewendet wird, um eine Vielzahl von Klassifikationsvorgängen zu erzeugen, von denen jeder auf einen einzelnen lernfähigen Vorgang derart angewendet wird, dass eine Ausgabe gemäß der kombinierten Ausgabe der lernfähigen Vorgänge erzeugt werden kann.

**49.** Signalklassifikationsvorrichtung (25) zum Erfassen und Klassifizieren von Verzerrungen, die in Signalen, die in die Vorrichtung eingegeben wurden, auftreten, in Übereinstimmung mit Klassifikationsdaten, **dadurch gekennzeichnet, dass** die Klassifikationsdaten durch ein Trainingsverfahren gemäß einem der Ansprüche 28 bis 48 erzeugt wurden.

**Revendications**

1. Dispositif d'apprentissage pour réaliser l'apprentissage d'un dispositif de classement de signal (5) du type agencé pour détecter des composantes prédéterminées d'un signal, caractéristiques d'une distorsion qui est présente dans le signal, et pour générer un classement indicatif de la gravité et/ou des types d'une distorsion présente, **caractérisé en ce que** le dispositif d'apprentissage comprend un moyen (8) pour fournir une séquence d'apprentissage comprenant un premier signal et une version déformée du premier signal, et un moyen d'analyse (9) pour recevoir la séquence d'apprentissage et générer une mesure de perception de distorsion destinée à indiquer la mesure dans laquelle la distorsion serait perceptible pour un observateur humain, et un moyen pour appliquer la mesure de perception de distorsion et le signal déformé au dispositif de classement de signal (5) pour déterminer les classements à appliquer à des signaux reçus en entrée ultérieurement dans le dispositif de classement de signal.

2. Dispositif d'apprentissage selon la revendication 1, dans lequel le moyen d'analyse (9) comprend un moyen de mesure (13, 14) pour estimer l'effet qui serait produit sur le système sensoriel humain par des versions déformées et non déformées du même signal, un moyen (15) pour déterminer les différences entre lesdits effets, et un moyen (17) pour générer ladite mesure de perception de distorsion suivant ladite différence.

3. Dispositif d'apprentissage selon la revendication 1 ou la revendication 2, dans lequel le moyen d'analyse comporte un moyen pour générer une mesure de perception de distorsion dont la valeur dépend de la signification perceptive pour un observateur humain de ladite distorsion, et dépend non linéairement de l'amplitude de ladite distorsion.

4. Dispositif d'apprentissage selon l'une quelconque des revendications précédentes, dans lequel le moyen d'analyse (9) comprend un moyen de mesure (13, 14) pour générer une pluralité de signaux de composantes spectrales dudit signal de test et/ou dudit signal déformé.

5. Dispositif d'apprentissage selon la revendication 4, dans lequel le moyen de mesure (13, 14) comporte un moyen pour estimer, pour chaque signal de composante spectrale, l'effet de masquage que produirait ce signal de composante spectrale sur le système sensoriel humain.

6. Dispositif d'apprentissage selon l'une quelconque des revendications précédentes, dans lequel le moyen d'analyse comprend un moyen de mesure (13, 14) pour estimer l'effet que produirait ladite distorsion sur le système sensoriel humain en prenant en compte ladite persistance dans le temps dudit effet.

7. Dispositif d'apprentissage selon la revendication 6, dans lequel le moyen d'analyse (9) comprend un moyen de mesure (13, 14) pour générer une séquence dans le temps des segments de signaux traités successifs à partir dudit signal de test et/ou dudit signal déformé, la valeur d'au moins certains segments de signaux étant générée suivant des parties dudit signal de test et/ou signal déformé qui précèdent et/ou suivent lesdits segments de signaux.

**8.** Dispositif d'apprentissage selon l'une quelconque des revendications précédentes, dans lequel le moyen d'analyse (9) comprend un moyen de mesure (13, 14) pour décomposer le signal déformé en une pluralité de bandes de composantes spectrales, les bandes de composantes spectrales étant mises en forme pour procurer un masquage spectral, et pour calculer le masquage dans le temps du signal dû aux parties précédente et/ou suivante dans le temps de celui-ci, un moyen (15, 16) pour former, pour chacun des signaux de composantes spectrales, une représentation de la différence entre le signal de composante du signal déformé et une composante calculée de façon correspondante du signal de test, et un moyen de calcul (17) pour générer ladite mesure de perception de distorsion à partir de ladite représentation de différence.

**9.** Dispositif d'apprentissage selon la revendication 8, dans lequel le moyen de calcul (17) génère une mesure de la distribution spectrale et par rapport au temps de la distorsion à partir dudit signal de différence.

**10.** Dispositif d'apprentissage selon l'une quelconque des revendications 1 à 9, comprenant un moyen pour générer des classements indicatifs du type de distorsion qui est présent.

**11.** Dispositif d'apprentissage selon la revendication 10, comprenant un premier dispositif de traitement pouvant subir un apprentissage pour identifier la qualité globale du signal, et un second dispositif de traitement pouvant subir un apprentissage pour identifier le type ou les types de la distorsion présente.

**12.** Dispositif d'apprentissage selon l'une quelconque des revendications précédentes, configuré pour analyser des signaux vocaux.

**13.** Dispositif d'apprentissage selon l'une quelconque des revendications 1 à 12, configuré pour analyser des signaux vidéo.

**14.** Dispositif d'apprentissage selon la revendication 13, comprenant un moyen pour identifier des parties de l'image, représentées par le signal vidéo, présentant la signification perceptuelle la plus grande pour un observateur humain, et un moyen pour pondérer ces parties de l'image dans l'entrée vers le moyen d'analyse.

**15.** Dispositif d'apprentissage selon la revendication 14, comportant un moyen (38) pour identifier des limites des éléments d'image, et un moyen pour pondérer les parties de l'image contenant de telles limites comme étant d'une signification perceptive plus grande.

**16.** Dispositif d'apprentissage selon la revendication 13, 14 ou 15, comprenant un moyen (31, 32) pour analyser des fréquences spatiales à l'intérieur des images vidéo.

**17.** Dispositif d'apprentissage selon la revendication 16, lorsqu'elle dépend de la revendication 15, comprenant un moyen pour identifier les composantes de fréquences spatiales à haute fréquence dans l'image.

**18.** Dispositif d'apprentissage selon l'une quelconque des revendications précédentes, comprenant un moyen pour générer, à partir de la séquence d'apprentissage, une pluralité de mesures de perception de distorsion en vue d'une application à une pluralité de dispositifs de traitement pouvant subir un apprentissage.

**19.** Dispositif de classement de signal pour détecter des composantes d'un signal prédéterminées dans un signal, les composantes étant caractéristiques d'une distorsion qui est présente dans le signal, et comportant un moyen pour générer une sortie indicative de la présence, de la gravité et/ou du type de la distorsion présente, comprenant un dispositif d'apprentissage selon l'une quelconque des revendications précédentes pour programmer le dispositif de classement de signal afin d'identifier de telles distorsions.

**20.** Dispositif de classement de signal selon la revendication 19, comprenant deux éléments de classement de signal ou plus, dont au moins l'un est programmable par le dispositif d'apprentissage.

**21.** Dispositif de classement de signal selon la revendication 20, dans lequel au moins un élément de classement de signal est préprogrammé pour identifier un type de distorsion prédéterminé.

**22.** Dispositif selon la revendication 21, dans lequel un élément de classement de signal préprogrammé est agencé pour identifier l'étalement des éléments d'une image vidéo présentant des fréquences spatiales élevées, ou leur absence complète, ce qui est indicatif du fait que l'image est floue.

20

**23.** Dispositif selon la revendication 21 ou 22, dans lequel un élément de classement de signal préprogrammé est agencé pour identifier des limites des éléments d'une image vidéo qui se déplacent, et pondérer les limites de l'image où un tel déplacement a lieu en tant qu'entrée vers le moyen de mesure de perception de distorsion.

**24.** Dispositif selon l'une quelconque des revendications 21 à 23, dans lequel un élément de classement de signal préprogrammé est agencé pour identifier, dans une image vidéo, des blocs rectilignes, chaque bloc étant d'une couleur uniforme et d'une taille prédéterminée.

**25.** Dispositif selon l'une quelconque des revendications 21 à 24, dans lequel un élément de classement de signal préprogrammé est agencé pour identifier des corrélations dans des limites décalées les unes par rapport aux autres à l'intérieur d'une image vidéo, indicatives d'une interférence par trajets multiples dans le signal vidéo.

**26.** Dispositif selon les revendications 21 à 25, dans lequel un élément de classement de signal préprogrammé est agencé pour identifier des corrélations entre des groupes d'images vidéo successives indicatives d'un mouvement saccadé.

**27.** Dispositif selon l'une quelconque des revendications 21 à 26, dans lequel un élément de classement de signal préprogrammé est agencé pour identifier des éléments de pixels individuels d'une image qui ne sont pas corrélés avec d'autres éléments d'image de la même image, et ne sont pas corrélés avec des éléments similaires dans des images successives, ce qui est indicatif d'un bruit blanc apparaissant sur le signal vidéo d'entrée.

**28.** Procédé d'apprentissage d'un traitement de classification de signal pouvant subir un apprentissage, du type dans lequel des composantes prédéterminées d'un signal caractéristiques d'une distorsion qui est présente dans le signal sont détectées, et un classement indicatif de la gravité et/ou des types de la distorsion présente est généré, le procédé d'apprentissage étant **caractérisé par** les étapes consistant à fournir une séquence d'apprentissage comprenant un premier signal (8a) et une version déformée (8b) du premier signal, à mesurer à quel point la distorsion du signal sera perceptible pour un observateur humain (16) et définir une opération de classement (17) conformément au résultat de ladite mesure, l'opération de classement étant agencée pour classer des signaux, appliqués ultérieurement en entrée du traitement de classification de signal, conformément à la présence ou à l'absence d'une distorsion sur un plan perceptif significative.

**29.** Procédé selon la revendication 28, dans lequel le traitement de mesure estime l'effet qui serait produit sur le système sensoriel humain par des versions déformées et non déformées du même signal, détermine les différences entre lesdits effets, et génère ladite mesure de perception de distorsion suivant ladite différence.

**30.** Procédé selon la revendication 28 ou la revendication 29, dans lequel le traitement de mesure génère ladite mesure de perception de distorsion de façon à dépendre de la signification pour un observateur humain de ladite distorsion, et à dépendre non linéairement de l'amplitude de ladite distorsion.

**31.** Procédé selon la revendication 28, 29 ou 30, dans lequel le traitement de mesure génère une pluralité de signaux de composantes spectrales dudit signal de test et/ou dudit signal déformé.

**32.** Procédé selon la revendication 31, dans lequel le traitement de mesure estime, pour chaque signal de composante spectrale, l'effet de masquage que produirait ce signal de composante spectrale sur le système sensoriel humain.

**33.** Procédé selon la revendication 28, 29, 30, 31 ou 32, dans lequel ledit traitement de mesure estime l'effet que produirait ladite distorsion sur le système sensoriel humain en prenant en compte la persistance dans le temps dudit effet.

**34.** Procédé selon la revendication 28, 29, 30, 31, 32 ou 33, dans lequel le traitement de mesure décompose le signal déformé en une pluralité de bandes de composantes spectrales, les bandes de composantes spectrales étant mises en forme pour procurer un masquage spectral, calcule le masquage dans le temps du signal dû aux parties précédente et/ou suivante dans le temps de celui-ci, forme, pour chacun des signaux de composantes spectrales, une représentation de la différence entre le signal de composante du signal déformé et une composante calculée de façon correspondante du signal de test, et génère ladite mesure de perception de distorsion d'après ladite représentation de différence.

**35.** Procédé selon la revendication 34, dans lequel le traitement d'analyse génère une mesure de la distribution spectrale et par rapport au temps de la distorsion à partir dudit signal de différence.

36. Procédé selon l'une quelconque des revendications 28 à 35, comprenant l'étape consistant à générer, à partir d'une opération de classement, une indication du type de distorsion qui est présente.

37. Procédé selon la revendication 36, comprenant les étapes consistant à identifier la qualité globale du signal, et à identifier le type ou les types de la distorsion qui est présente.

38. Procédé selon l'une quelconque des revendications 28 à 37, dans lequel les signaux sont des signaux audio.

39. Procédé selon la revendication 38, dans lequel les signaux sont des signaux vocaux.

40. Procédé selon l'une quelconque des revendications 28 à 37, dans lequel les signaux sont des signaux vidéo.

41. Procédé selon la revendication 40, dans lequel les signaux sont analysés dans des segments correspondant à des trames individuelles du signal vidéo.

42. Procédé selon la revendication 40 ou 41 comprenant les étapes consistant à identifier des parties de l'image représentées par le signal à signification perceptive relativement plus grande pour un observateur humain, et à procurer une pondération pour ces parties de telles images en tant qu'entrée vers le traitement de mesure de perception de distorsion.

43. Procédé selon la revendication 42, comprenant les étapes consistant à identifier des limites des éléments d'image, et à pondérer les parties de l'image contenant de telles limites comme étant d'une signification perceptive supérieure.

44. Procédé selon la revendication 41, 42 ou 43, comprenant l'étape consistant à analyser des fréquences spatiales à l'intérieur des images vidéo.

45. Procédé selon la revendication 44 lorsqu'elle dépend de la revendication 43, comprenant l'étape consistant à identifier des composantes de fréquences spatiales à haute fréquence dans l'image.

46. Procédé selon l'une quelconque des revendications 41 à 45, comprenant les étapes consistant à analyser l'image vidéo en termes de trois images différentes en couleurs, et à identifier des corrélations, ou un manque de corrélations, entre les images.

47. Procédé d'apprentissage d'un dispositif d'analyse de signal pouvant subir un apprentissage, comprenant les étapes consistant à :

émettre une première séquence d'apprentissage depuis un emplacement distant, sur un réseau à surveiller, vers un emplacement de surveillance,
générer une seconde séquence d'apprentissage identique, à l'emplacement de surveillance,
exécuter le traitement d'analyse selon l'une quelconque des revendications 28 à 46 pour mesurer le degré perceptuel de distorsion dans la séquence d'apprentissage reçue à l'emplacement de surveillance depuis l'emplacement à distance, par une comparaison avec la seconde séquence d'apprentissage,
classer les mesures résultantes conformément audit degré perceptif de la distorsion, et
configurer le traitement pouvant subir un apprentissage conformément au classement résultant.

48. Procédé selon l'une quelconque des revendications 28 à 47, dans lequel le signal d'apprentissage est appliqué à une pluralité de traitements d'analyse perceptive destinés à générer une pluralité d'opérations de classement, chacune pour une application à un traitement individuel pouvant subir un apprentissage tel qu'une sortie puisse être générée conformément à la sortie combinée des traitements pouvant subir un apprentissage.

49. Dispositif de classement de signal (25) pour détecter et classer des distorsions apparaissant dans les signaux appliqués en entrée au dispositif, conformément à des données de classification, **caractérisé en ce que** les données de classification ont été générées par un procédé d'apprentissage selon l'une quelconque des revendications 28 à 48.

# Figure 1

# Figure 2

EP 0 879 527 B1

# Figure 3

# Figure 4

# Figure 5

# Figure 6

EP 0 879 527 B1

# Figure 7

# Figure 8